# EUROPEAN PATENT APPLICATION

(11) **EP 4 700 756 A2**
(43) Date of publication of application: **25.02.2026**
(21) Application number: 24803588.3
(22) Date of filing: 18.03.2024
(51) Int. Cl.: G09G 3/32, G06F 1/16, G02B 27/01

(54) **ELECTRONIC DEVICE AND METHOD FOR CONTROLLING LIGHT-EMITTING ELEMENTS OF DISPLAY**

(30) Priority: 11.05.2023 KR 20230060906; 07.06.2023 KR 20230073166
(71) Applicant: Samsung Electronics Co., Ltd., Suwon-si, Gyeonggi-do 16677 (KR)
(72) Inventor: JANG, Euntaek, Suwon-si Gyeonggi-do 16677 (KR); LEE, Hongkook, Suwon-si Gyeonggi-do 16677 (KR); KIM, Kiwoo, Suwon-si Gyeonggi-do 16677 (KR); PARK, Seoungyong, Suwon-si Gyeonggi-do 16677 (KR); HER, Yongkoo, Suwon-si Gyeonggi-do 16677 (KR)
(74) Representative: Gulde & Partner
(86) International application number: PCT/KR2024/003372
(87) International publication number: WO 2024/232532

(57) **Abstract**

This wearable device may comprise: a driving layer including a silicon substrate; and a display including a light-emitting layer on the driving layer. The light-emitting layer can include a plurality of light-emitting elements. The wearable device can include a processor. The display can: receive, from the processor, a signal indicating a first mode or a second mode, which is different from the first mode, for low power; cause some of the light-emitting elements of a first line to emit light during a first time interval in the second mode identified on the basis of the signal; and cause some light-emitting elements of the first line to emit, by using a second line connected to the first line, light during a second time interval extending from the first time interval during which some light-emitting elements of the first line emit light.

## Description

### [Technical Field]

The following descriptions relate to an electronic device and a method for controlling a light-emitting element of a display.

### [Background Art]

An electronic device may include a display. For example, the display may include a plurality of light-emitting elements. For example, the electronic device may display an image provided from a processor of the electronic device on the display based on emission of the plurality of light-emitting elements.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

A wearable device may include a display including a driving layer including a silicon substrate and an emission layer on the driving layer. The emission layer may include a plurality of light-emitting elements. The wearable device may include a processor. The display may be configured to receive a signal instructing a first mode or a second mode for a low-power different from the first mode from the processor. The display may be configured to sequentially emit, in the first mode identified based on the signal, a plurality of lines including a first line of the display and a second line continuous with the first line. Light-emitting elements included in each of the plurality of lines may emit during a first time period. The display may be configured to emit, in the second mode identified based on the signal, a portion of light-emitting elements among light-emitting elements in the first line during the first time period, and the portion of light-emitting elements in the first line during a second time period extended from the first time period during which the portion of light-emitting elements in the first line emits using the second line connected to the first line.

A wearable device may include a driving layer including a silicon substrate and a display including an emission layer on the driving layer. The emission layer may include a plurality of light-emitting elements. The wearable device may include a processor. The display may be configured to receive, from the processor, a signal instructing execution of a mode for a low-power. The display may be configured to emit, during a first time period, a portion of light-emitting elements among first light-emitting elements in a first line among a plurality of lines of the display in the mode. The display may be configured to, in the mode, refrain from emission of second light-emitting elements in a second line continuous with the first line and connected to the first line and to emit the portion of light-emitting elements among the first light-emitting elements during a second time period extended from the first time period using the second line.

### [Description of the Drawings]

FIG. 1 is a block diagram of an electronic device in a network environment according to various embodiments.
FIG. 2 is a block diagram of a display module according to various embodiments.
FIG. 3A illustrates an example of a display including a memory in pixel (MIP).
FIG. 3B illustrates an example of a sub pixel including an MIP.
FIGS. 4A to 4C illustrate an example of a method of controlling a light-emitting element of a display according to a mode of an electronic device.
FIG. 5A illustrates an example of a block diagram for indicating a flow of displaying an image in a first mode.
FIG. 5B illustrates an example of a method of converting data of an image in a first mode.
FIG. 5C illustrates an example of a light-emitting state of light-emitting elements for displaying an image in a first mode.
FIG. 6A illustrates an example of a block diagram for indicating a flow of displaying an image in a second mode.
FIG. 6B illustrates an example of a method of converting data of an image in a second mode.
FIG. 6C illustrates an example of a light-emitting state of light-emitting elements for displaying an image in a second mode.
FIG. 7A illustrates exemplary circuitry for a display that drives a plurality of lines in a first mode.
FIG. 7B illustrates exemplary circuitry for a display that drives a plurality of lines in a second mode.
FIGS. 8A and 8B illustrate an example of a method of driving a plurality of lines having a first connection state in a second mode.
FIGS. 9A and 9B illustrate an example of a method of driving a plurality of lines having a second connection state in a second mode.
FIG. 10 illustrates an example of an operation flow of controlling a light-emitting element of a display.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term (e.g., a processor, a display, a driver, a block, a circuit, and the like) referring to a configuration of a device, a term (e.g., a step, an operation, or a procedure) for a calculation state, a term (e.g., an image, a signal, information, data, and the like) referring to a signal, and a term (e.g., a value, and the like) referring to data, which are used in the following description, are exemplified for convenience of description. Therefore, the present disclosure is not limited to terms described below, and another term having an equivalent technical meaning may be used.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B).

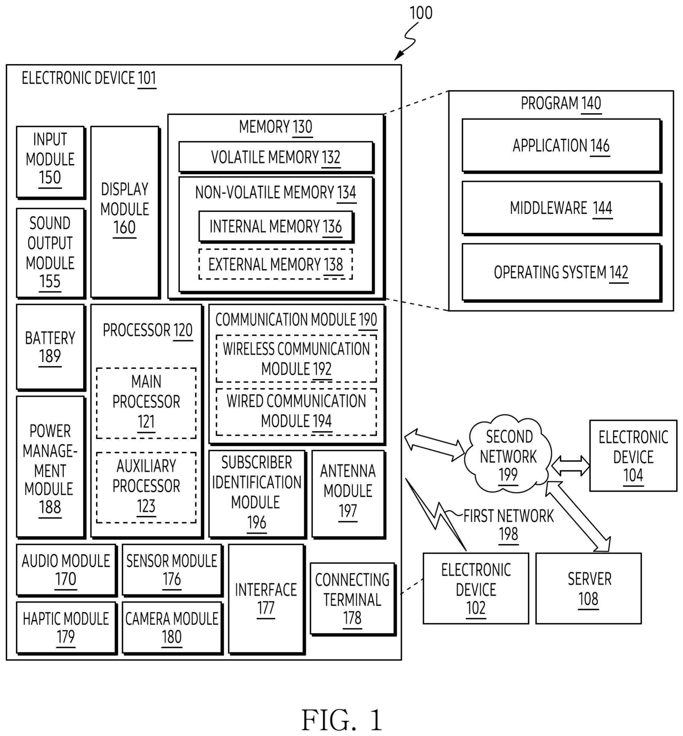

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

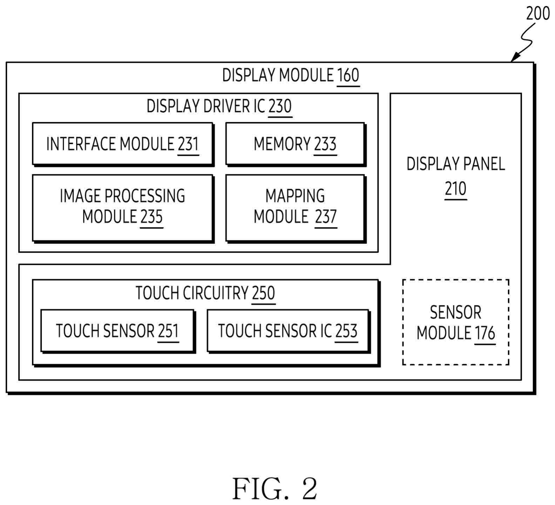

FIG. 2 is a block diagram 200 illustrating the display module 160 according to various embodiments.

Referring to FIG. 2, the display module 160 may include a display 210 and a display driver integrated circuit (DDI) 230 to control the display 210. The DDI 230 may include an interface module 231, memory 233 (e.g., buffer memory), an image processing module 235, or a mapping module 237. The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 250 or the sensor module 176 via the interface module 231. The DDI 230 may also store at least part of the received image information in the memory 233, for example, on a frame by frame basis. The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210. The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display module 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display module 160. For example, when the sensor module 176 embedded in the display module 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display module 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

The DDI 230 and the display panel 210 included in the display module 160 of FIG. 2 may also be implemented in a component. For example, the display module 160 may include a plurality of layers. Among the plurality of layers, a specific layer may include components of the DDI 230, and another specific layer may include components of the display panel 210. Alternatively, the component of the DDI 230 and the components of the display panel 210 may also be disposed across at least some layers of the plurality of layers. For example, the plurality of layers may include a driving layer. For example, the driving layer may be a layer substantially including the components of the DDI 230. For example, the driving layer may include a silicon substrate. The silicon substrate may be referred to as a silicon backplane. The display module 160 using the silicon substrate may drive a glass substrate at a high speed at a relatively low voltage compared with the display module. For example, the display module 160 using the silicon substrate may be used in a wearable device (e.g., an AR device and a VR device).

For example, the display module 160 including the silicon substrate may include a memory cell for each of a plurality of light-emitting elements. For example, the memory cell may store data to be emitted by a light-emitting element. For example, the memory cell may include static random access memory (SRAM). The memory cell may be disposed in a region adjacent to a corresponding light-emitting element. For example, the adjacent region may be defined as a sub pixel including the light-emitting element and the memory cell. As described above, a structure of the light-emitting element and the sub pixel including the memory cell for the light-emitting element may be referred to as a memory in pixel (MIP) structure.

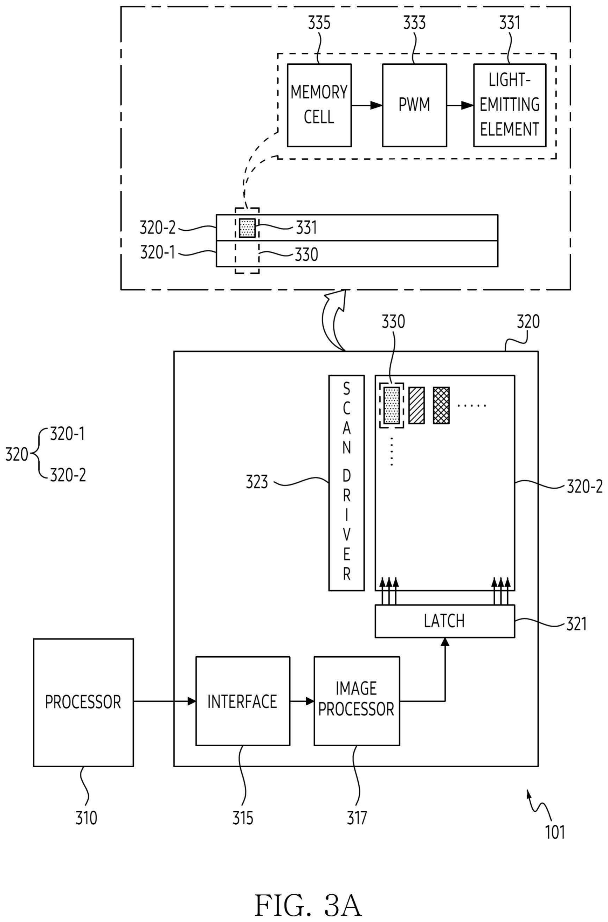

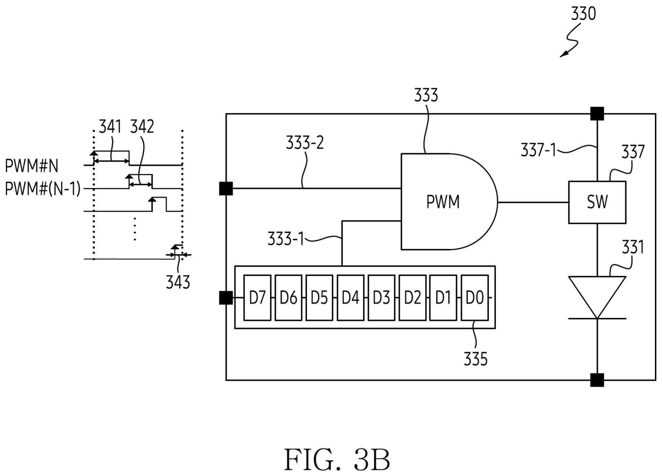

Hereinafter, the display may be referred to as including at least some components of the display module 160 of FIG. 2. For example, the display may be referred to as a component including the DDI 230 and the display panel 210. In the following FIGS. 3A and 3B, an example of the display including the MIP is illustrated.

FIG. 3A illustrates an example of a display including a memory in pixel (MIP).

Referring to FIG. 3A, an electronic device 101 may include a processor 310 and a display 320. For example, the electronic device 101 may include a wearable device. For example, the wearable device may include an AR device (e.g., AR glasses). The electronic device 101 of FIG. 3A may include at least a portion of the electronic device 101 of FIG. 1. For example, the processor 310 may include at least a portion of the processor 120. For example, the display 320 may include at least a portion of the display module 160.

Referring to FIG. 3A, for example, the display 320 may include a plurality of layers 320-1 and 320-2. For example, the plurality of layers 320-1 and 320-2 may include a driving layer 320-1 and an emission layer 320-2. For example, the driving layer 320-1 may indicate a layer that performs control and processing to display an image by emitting light-emitting elements 331 of the emission layer 320-2. For example, the driving layer 320-1 may include a silicon substrate. For example, the emission layer 320-2 may include a plurality of light-emitting elements 331. For example, the emission layer 320-2 may be disposed on the driving layer 320-1.

For example, the display 320 may include an interface 315, an image processor 317, a latch 321, and a scan driver 323. For example, the interface 315, the image processor 317, the latch 321, and the scan driver 323 may be included in the plurality of layers 320-1 and 320-2. For example, the interface 315, the image processor 317, the latch 321, and the scan driver 323 may be included in the driving layer 320-1. For example, the interface 315, the image processor 317, the latch 321, and the scan driver 323 may be disposed across the driving layer 320-1 and the emission layer 320-2. In addition, for example, at least some of the interface 315, the image processor 317, the latch 321, and the scan driver 323 may also be included in the emission layer 320-2.

For example, the interface 315 may connect the display 320 and the processor 310. For example, the interface 315 may include a mobile industry processor interface (MIPI) interface. For example, the processor 310 may provide the display 320 with an image and a control signal through the interface 315. For example, the image may indicate information to be displayed externally through emission of the light-emitting elements 331. For example, the control signal may include information for instructing a mode in which the display 320 is to be driven. For example, the interface 315 may include at least a portion of the interface module 231 of FIG. 2.

For example, the image processor 317 may perform pre-processing or post-processing (e.g., a resolution, brightness, or a size adjustment) with respect to at least a portion of the image based on characteristics of the image or characteristics of the emission layer 320-2 of the display 320. For example, the image processor 317 may generate a voltage value or a current value corresponding to the pre-processed or post-processed image. For example, the generation of the voltage value or the current value may be performed based on at least a portion of properties (e.g., an arrangement of pixels (an RGB strip or a pentile structure), or a size of each of the sub pixels) of the sub pixels of the emission layer 320-2 of the display 320. The properties may also be referred to as properties of a light-emitting element included in a sub pixel. The image processor 317 of FIG. 3A may include at least a portion of the image processing module 235 of FIG. 2. The image processor 317 of FIG. 3A may include at least a portion of a mapping module 237. In addition, FIG. 3A illustrates an example in which the image processor 317 performs the function described above, but an embodiment of the present disclosure is not limited thereto. For example, the display 320 may also include another component that performs substantially the same function as described above.

For example, the latch 321 may provide the plurality of light-emitting elements 331 (or sub pixels 330) included in the display 320 with data (or image data) processed by the image processor 317. For example, the latch 321 may latch or forward the data obtained from the image processor 317 to the plurality of light-emitting elements 331 (or the sub pixels 330).

For example, the scan driver 323 may provide a plurality of scan lines with a scan signal. For example, each of the plurality of scan lines may be connected to a plurality of light-emitting elements. For example, the emission layer 320-2 may include the plurality of light-emitting elements. For example, the plurality of light-emitting elements may be defined through a row indicating a first direction and a column indicating a second direction perpendicular to the first direction. For example, the second direction may indicate a direction in which the plurality of scan lines are disposed. For example, one scan line may be connected to light-emitting elements disposed on one row of the plurality of light-emitting elements. Hereinafter, the scan line may be referred to as one line.

For example, the display 320 may include a plurality of sub pixels 330. For example, the sub pixel 330 may include a light-emitting element 331, circuitry 333 for pulse width modulation (PWM), and a memory cell 335. For example, the light-emitting element 331 may be included in the emission layer 320-2. For example, the light-emitting element 331 may be connected to the circuitry 333. For example, the light-emitting element 331 may be connected to the memory cell 335 through the circuitry 333.

For example, the circuitry 333 for the PWM may be disposed in a region adjacent to the light-emitting element 331 defined by the sub pixel 330. For example, the circuitry 333 may be disposed in a region of the emission layer 320-2 in which the light-emitting element 331 is disposed. For example, the circuitry 333 may be disposed in a region of the driving layer 320-1 corresponding to the emission layer 320-2 in which the light-emitting element 331 is disposed. Alternatively, the circuitry 333 may be disposed across the emission layer 320-2 and the driving layer 320-1. The circuitry 333 may extend from the region of the emission layer 320-2 and be included in the region of the driving layer 320-1.

For example, the memory cell 335 may be disposed in the region of the emission layer 320-2 in which the light-emitting element 331 is disposed. For example, the memory cell 335 may be disposed in the region of the driving layer 320-1 corresponding to the emission layer 320-2 in which the light-emitting element 331 is disposed. Alternatively, the memory cell 335 may be disposed across the emission layer 320-2 and the driving layer 320-1. The memory cell 335 may be extended from the region of the emission layer 320-2 and may be included in the region of the driving layer 320-1.

For example, the light-emitting element 331 may emit based on a signal obtained from the circuitry 333. For example, the signal may include a pulse. For example, the light-emitting element 331 may include a light emitting diode (LED). For example, the light-emitting element 331 may include a light emitting diode whose color is red (R), blue (B), or green (G), visible from the outside. For example, the signal may be used to control a timing at which the light-emitting element 331 emits according to a length (or width) of the pulse. For example, as the length of the pulse of the signal becomes longer, the timing for the light-emitting element 331 to emit becomes longer, so a brighter color may be displayed. In other words, a gradation (or a gray level) of a color indicated by the light-emitting element 331 may be changed based on the width of the pulse. A method of generating the pulse based on a bit sequence may be referred to as a PWM scheme. The length of the pulse may be identified based on data stored in the memory cell 335 for the light-emitting element 331.

Referring to the above description, the display 320 of FIG. 3A may include at least a portion of the DDI 230 and the display panel 210 of FIG. 2. The at least a portion of the DDI 230 may include an interface module 231, memory 233, and an image processing module 235. For example, at least a portion of the interface module 231 may be included in the interface 315 of FIG. 3A. For example, at least a portion of the memory 233 may be included in the memory cell 335 of FIG. 3A. For example, at least a portion of the image processing module 235 may be included in the image processor 317. For example, FIG. 3A illustrates an example in which the image processor 317 is included in the display 320, but an embodiment of the present disclosure is not limited thereto. For example, the image processor 317 may be located outside the display 320. In a case that the image processor 317 is located outside the display 320, the display 320 may further include another interface for connecting the image processor 317 and the latch 321.

Referring to the above description, the display 320 including the driving layer 320-1 including the silicon substrate may store logic calculated data in the memory cell 335 for the light-emitting element 331. For example, the data may include the bit sequence. For example, the bit sequence may be configured with 8 bits. For example, the length of the pulse may be identified based on a value of a bit of the bit sequence. Specific content associated with this is described in FIG. 3B below.

FIG. 3B illustrates an example of a sub pixel including an MIP.

FIG. 3B illustrates an example of a structure of the sub pixel 330 of FIG. 3A. Referring to FIG. 3B, the sub pixel 330 may include a light-emitting element 331, circuitry 333 for PWM, a memory cell 335, and a switch 337.

For example, the light-emitting element 331 may be connected to the circuitry 333 through the switch 337. For example, the switch 337 may connect the circuitry 333 and the light-emitting element 331 at a timing at which the sub pixel 330 (or the light-emitting element 331) starts to emit. For example, the timing may include a timing at which a time period during which a line associated with the sub pixel 330 (or the light-emitting element 331) emits starts. For example, the switch 337 may disconnect a connection between the circuitry 333 and the light-emitting element 331 at a timing at which the sub pixel 330 (or the light-emitting element 331) ends to emit. For example, the timing may include a timing at which a time period during which the line associated with the sub pixel 330 (or the light-emitting element 331) emits ends (or expires). For example, a display 320 may control a connection state of the switch 337 for each line. For example, the display 320 may control the switch 337 using a path 337-1.

For example, the circuitry 333 may generate a pulse based on data stored in the memory cell 335. For example, the circuitry 333 may obtain the data from the memory cell 335 through a path 333-1. For example, the data may include an 8-bit bit sequence. For example, the memory cell 335 may store the 8-bit bit sequence. However, an embodiment of the present disclosure is not limited thereto, and a bit sequence having another length may also be stored in the memory cell 335. For example, the circuitry 333 may perform generation of the pulse based on a control signal obtained through a path 333-2.

For example, a width of the pulse may be determined based on a bit value of the bit sequence. For example, in a case that the bit value is 1, a pulse for a bit having the value may be generated. For example, in a case that the bit value is 0, a pulse for a bit having the value may not be generated. However, an embodiment of the present disclosure is not limited thereto, and in a case that the bit value is 0, the pulse may also be generated. For example, the width of the pulse according to the bit value of the bit sequence may be formed differently according to a location of the bit in the bit sequence. For example, as it is closer to a least significant bit (LSB) in the bit sequence, the width of the pulse may be short. For example, as it is closer to a most significant bit (MSB) of the bit sequence, the width of the pulse may become long. For example, a width 341 may indicate a length of a pulse when a value of the MSB of the bit sequence is 1. For example, a width 342 may indicate a length of a pulse when a value of a bit following the MSB of the bit sequence is 1. For example, a width 343 may indicate a length of a pulse when a value of the LSB of the bit sequence is 1. However, an embodiment of the present disclosure is not limited thereto, and the width of the pulse may also be longer as the location of the bit is closer to the LSB. As described above, a scheme for generating a pulse having a width according to the value of the bit in the bit sequence may be referred to as a PWM scheme. In FIG. 3B, only a case that a value of one bit of the bits of the bit sequence is 1 is exemplified, but an embodiment of the present disclosure is not limited thereto. For example, values of a plurality of bits among the bits of the bit sequence may be 1. Alternatively, a total bit value of the bit sequence may be 0.

In order to provide an enhanced user experience, an electronic device 101 that provides an augmented reality (AR) service that displays information generated by a computer in connection with an external object in a real-world is being developed. The augmented reality may be referred to as a virtual environment. For example, the electronic device 101 may include a wearable device that may be worn by a user. For example, the electronic device 101 may include user equipment, AR glasses, and/or a head-mounted device (HMD).

The electronic device 101 including an LED (e.g., a micro-light emitting diode (µLED)) display for AR may be designed in a form of glasses. For example, the electronic device 101 may include an AR device in the form of glasses. As light emitted from the display 320, which is a light source, is transmitted to a portion of a glass through a lens, the electronic device 101 may transmit the light to the user's eye using the electronic device 101 using a total reflection inside the display 320. The light being transmitted may indicate that an image is displayed through the display 320. In this case, the display 320 included in the electronic device 101 may include a light-emitting region having a relatively narrow area. In addition, the electronic device 101 in the form of glasses may have a limitation in a mounting structure.

The electronic device 101, which is an AR device, may require a high pixel per inch (PPI) to provide a more immersive user experience. Accordingly, the display 320 of the electronic device 101 needs to support a high resolution in a light-emitting region having a narrow area of the display 320. To this end, the electronic device 101 may use a sub pixel rendering pixel structure (hereinafter referred to as a sub pixel rendering structure) that may provide a high resolution by using a small number of pixels (or sub pixels). For example, the sub pixels 330 included in the display 320 of the electronic device 101 may be implemented in the sub pixel rendering structure. For example, the sub pixel rendering structure may include an RGBG sub pixel rendering structure.

In addition, the electronic device 101 in the form of glasses may require high-output emission since an energy transfer efficiency of the lens is low. In other words, a high output is required for smooth service provision of the electronic device 101, but a capacity of a battery may be limited according to a narrow mounting region of the electronic device 101. To solve this problem, the electronic device 101 may use a mode for a low-power. The mode for the low-power may indicate a state in which the electronic device 101 or the display 320 operates with the low-power. However, simply, a method of converting and operating RGBG data into RGB data in the RGBG sub pixel rendering structure may cause a decrease in screen brightness of the display 320 as the number of pixels (sub pixels) used decreases.

Hereinafter, an electronic device and a method according to an embodiment of the present disclosure may use the mode for the low-power that drives a portion of sub pixels among all sub pixels of the display 320 having the RGBG sub pixel rendering structure. The electronic device and the method according to an embodiment of the present disclosure may reduce power consumption of a processor 310 (e.g., an application processor) by outputting an image having a lower resolution than the mode for the low-power and another mode. In addition, the electronic device and the method according to an embodiment of the present disclosure may reduce power consumption by reducing the number of sub pixels that emit when using the mode for the low-power. In addition, the electronic device and the method according to an embodiment of the present disclosure may compensate for a decrease in brightness that occurs when some sub pixels are driven using additional emission.

Hereinafter, in the present disclosure, the other mode may indicate a state in which a power management integrated circuit (PMIC) (e.g., a power management module 188) of the electronic device 101 provides a steady state power. For example, the other mode may be referred to as a normal mode or an active state mode. Hereinafter, in the present disclosure, for convenience of description, the other mode may be referred to as a first mode. For example, the mode for the low-power may be referred to as a second mode. The first mode and the second mode may be referred to as a state of at least some of the electronic device 101, the processor 310, or the display 320.

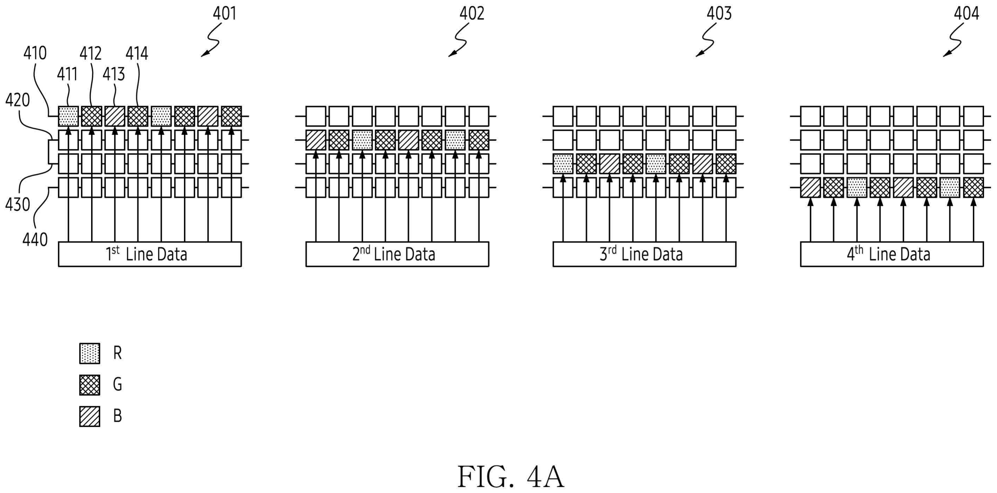

FIGS. 4A to 4C illustrate an example of a method of controlling a light-emitting element of a display according to a mode of an electronic device.

The mode of FIGS. 4A to 4C may include the first mode or the second mode. The electronic device may be understood substantially the same as the electronic device 101 of FIG. 1. For example, the display may include at least a portion of the display 320 of FIG. 3A. For example, the light-emitting element may be the light-emitting element 331 of the display 320.

Referring to FIG. 4A, examples 401, 402, 403, and 404 in which the display 320 controls emission of light-emitting elements in the first mode of an electronic device 101 are illustrated. The examples 401, 402, 403, and 404 may indicate an example in which the light-emitting elements emit over time. Referring to the examples 401, 402, 403, and 404, the display 320 may include a plurality of light-emitting elements. For example, the plurality of light-emitting elements may be connected to a plurality of lines. For example, each of the lines may be referred to as a scan line. For example, the plurality of lines may include a first line 410, a second line 420, a third line 430, and a fourth line 440. For example, the first line 410 may be connected to eight light-emitting elements. For example, the first line 410 may be connected to a first light-emitting element 411, a second light-emitting element 412, a third light-emitting element 413, a fourth light-emitting element 414, and the other light-emitting elements. The number of the plurality of lines, the number of the plurality of light-emitting elements, and the number of light-emitting elements connected to one line illustrated in FIG. 4A are merely exemplary, and an embodiment of the present disclosure is not limited thereto.

Referring to the example 401, the display 320 may emit the light-emitting elements in the first line 410. For example, the display 320 may emit all of the first light-emitting element 411, the second light-emitting element 412, the third light-emitting element 413, the fourth light-emitting element 414, and the other light-emitting elements in the first line 410. For example, the display 320 may emit the light-emitting elements in the first line 410 during a first time period. For example, the display 320 may emit the light-emitting elements in the first line 410 during the first time period from a first timing. The first timing may be triggered by a horizontal synchronization signal for the first line 410.

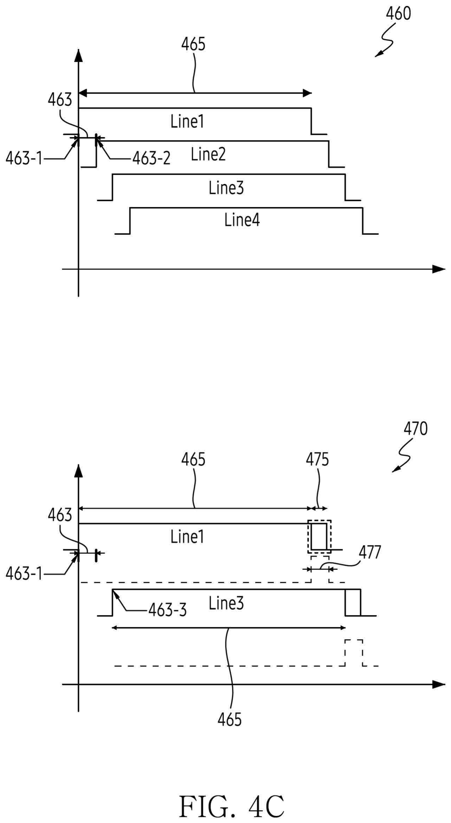

Referring to the example 402, the display 320 may emit light-emitting elements in the second line 420. For example, the display 320 may emit all of the light-emitting elements in the second line 420. For example, the display 320 may emit the light-emitting elements in the second line 420 during the first time period. For example, the display 320 may emit the light-emitting elements in the second line 420 during the first time period from a second timing. The second timing may be triggered by a horizontal synchronization signal for the second line 420. For example, a time interval between the second timing and the first timing may correspond to a period of the horizontal synchronization signal. Referring to the example 401 and the example 402, it is illustrated that the light-emitting elements in the first line 410 do not emit while the light-emitting elements in the second line 420 emit, but is merely exemplary for convenience of description, and an embodiment of the present disclosure is not limited thereto. For example, the examples 401, 402, 403, and 404 are intended to indicate that each line sequentially emits. In other words, the examples 401, 402, 403, and 404 may indicate that a timing at which each line emits is different from each other. For example, as illustrated in FIG. 4C, while the first line 410 emits, the second line 420 may also emit together with the first line 410 from a timing that has passed a certain time from the first timing at which the first line 410 starts to emit.

Referring to the example 403, the display 320 may emit light-emitting elements in the third line 430. For example, the display 320 may emit all of the light-emitting elements in the third line 430. For example, the display 320 may emit the light-emitting elements in the third line 430 during the first time period. For example, the display 320 may emit the light-emitting elements in the third line 430 during the first time period from a third timing.

Referring to the example 404, the display 320 may emit light-emitting elements in the fourth line 440. For example, the display 320 may emit all of the light-emitting elements in the fourth line 440. For example, the display 320 may emit the light-emitting elements in the fourth line 440 during the first time period. For example, the display 320 may emit the light-emitting elements in the fourth line 440 during the first time period from a fourth timing.

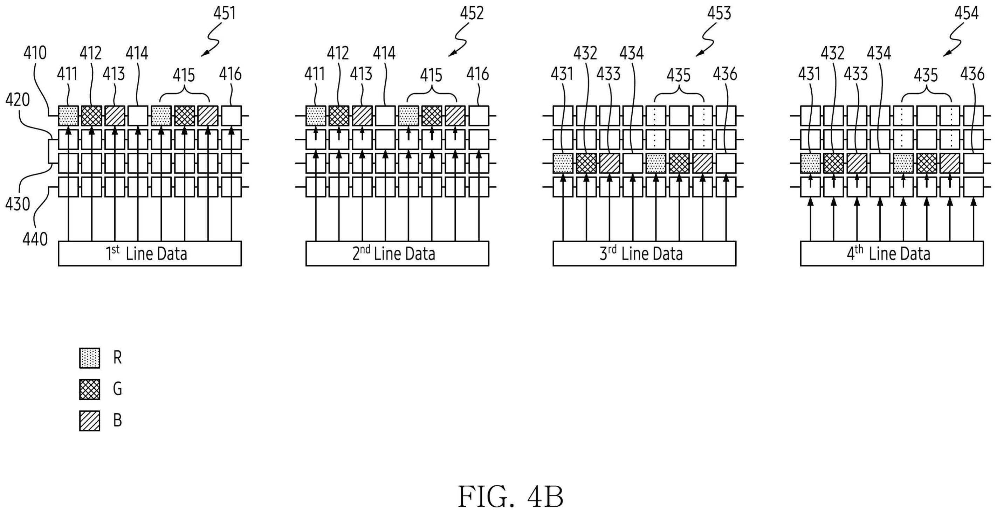

Referring to FIG. 4B, examples 451, 452, 453, and 454 in which the display 320 controls emission of light-emitting elements in the second mode of the electronic device 101 are illustrated. The examples 451, 452, 453, and 454 may indicate an example in which the light-emitting elements emit over time. Referring to the examples 451, 452, 453, and 454, the display 320 may include a plurality of light-emitting elements. For example, the plurality of light-emitting elements may be connected to a plurality of lines. For example, the lines may be referred to as a scan line. For example, the plurality of lines may include a first line 410, a second line 420, a third line 430, and a fourth line 440. For example, the first line 410 may be connected to eight light-emitting elements. For example, the first line 410 may be connected to a first light-emitting element 411, a second light-emitting element 412, a third light-emitting element 413, a fourth light-emitting element 414, and the other light-emitting elements. The number of the plurality of lines, the number of the plurality of light-emitting elements, and the number of light-emitting elements connected to one line illustrated in FIG. 4B are merely exemplary, and an embodiment of the present disclosure is not limited thereto.

Referring to the example 451, the display 320 may emit a portion of light-emitting elements among the light-emitting elements in the first line 410. For example, the display 320 may emit the first light-emitting element 411, the second light-emitting element 412, the third light-emitting element 413, and the other light-emitting elements 415 in the first line 410. In addition, in the second mode, the display 320 may refrain from (or may delay, may skip, or may not perform) emission of the portion of light-emitting elements in the first line 410. For example, the display 320 may skip emission of the fourth light-emitting element 414 and a light-emitting element 416 in the first line 410. When compared with the example 401, in order to reduce power consumption, in the second mode, the display 320 may not perform emission of a portion of light-emitting elements 414 and 416 among the light-emitting elements in the first line 410. For example, the display 320 may emit the light-emitting elements 411, 412, 413, and 415 in the first line 410 during a first time period. For example, the display 320 may emit the light-emitting elements 411, 412, 413, and 415 in the first line 410 during the first time period from a first timing. The first timing may be triggered by a horizontal synchronization signal for the first line 410.

Referring to the example 452, the display 320 may refrain from emission of the light-emitting elements in the second line 420. For example, the second line 420 may be a line continuous with the first line 410. For example, instead of the emission of the light-emitting elements in the second line 420, the display 320 may emit the light-emitting elements in the first line 410 again. For example, the display 320 may emit the portion of light-emitting elements among the light-emitting elements in the first line 410 again. For example, the display 320 may emit the first light-emitting element 411, the second light-emitting element 412, the third light-emitting element 413, and the other light-emitting elements 415 in the first line 410 again. For example, the display 320 may emit the light-emitting elements 411, 412, 413, and 415 in the first line 410 during a second time period different from the first time period. For example, the second time period may be shorter than the first time period. For example, the display 320 may emit the light-emitting elements 411, 412, 413, and 415 in the first line 410 during the second time period extended from the first time period in which the light-emitting elements 411, 412, 413, and 415 in the first line 410 emit, in the example 451. For example, a timing at which the second time period starts may be triggered from a timing at which emission of the first time period during which the light-emitting elements 411, 412, 413, and 415 in the first line 410 emit in the example 451 ends.

Referring to the example 453, the display 320 may emit a portion of light-emitting elements among the light-emitting elements in the third line 430. For example, the display 320 may emit a first light-emitting element 431, a second light-emitting element 432, a third light-emitting element 433, and the other light-emitting elements 435 in the third line 430. In addition, in the second mode, the display 320 may refrain from emission of the portion of light-emitting elements in the third line 430. For example, the display 320 may skip emission of a fourth light-emitting element 434 and a light-emitting element 436 in the third line 430. For example, the display 320 may emit the light-emitting elements 431, 432, 433, and 435 in the third line 430 during the first time period. For example, the display 320 may emit the light-emitting elements 431, 432, 433, and 435 in the third line 430 during the first time period from a third timing. The third timing may be triggered by a horizontal synchronization signal for the third line 430.

Referring to the example 454, the display 320 may refrain from emission of the light-emitting elements in the fourth line 440. For example, instead of the emission of the light-emitting elements in the fourth line 440, the display 320 may emit the light-emitting elements in the third line 430 again. For example, the display 320 may emit the portion of light-emitting elements among the light-emitting elements in the third line 430 again. For example, the display 320 may emit the first light-emitting element 431, the second light-emitting element 432, the third light-emitting element 433, and the other light-emitting elements 435 in the third line 430 again. For example, the display 320 may emit the light-emitting elements 431, 432, 433, and 435 in the third line 430 during the second time period. For example, the second time period may be shorter than the first time period. For example, the display 320 may emit the light-emitting elements 431, 432, 433, and 435 in the third line 430 during the second time period extended from the first time period during which the light-emitting elements 431, 432, 433, and 435 in the third line 430 emit in the example 453. For example, a timing at which the second time period starts may be triggered from a timing at which emission of the first time period during which the light-emitting elements 431, 432, 433, and 435 in the third line 430 emit in the example 453 ends.

FIG. 4C illustrates an example 460 of a time period during which the light-emitting elements emit in the examples 401, 402, 403, and 404 of FIG. 4A and an example 470 of a time period during which the light-emitting elements emit in the examples 451, 452, 453, and 454 of FIG. 4B.

Referring to the example 460, for example, the display 320 may sequentially emit a plurality of lines of the display 320. For example, the display 320 may sequentially emit all light-emitting elements in each of the plurality of lines. Each of the plurality of lines may emit during a first time period 465. For example, the display 320 may emit all of the light-emitting elements in the first line 410 during the first time period 465 from a first timing 463-1. For example, the display 320 may emit all of the light-emitting elements in the second line 420 during the first time period 465 from a second timing 463-2. For example, a time interval 463 between the second timing 463-2 and the first timing 463-1 may be a designated length. For example, the time interval 463 may correspond to a period of a horizontal synchronization signal.

Referring to the example 470, for example, the display 320 may emit a portion of light-emitting elements (e.g., the light-emitting elements 411, 412, 413, and 415) among the light-emitting elements in the first line 410 during the first time period 465. For example, the display 320 may emit the portion of light-emitting elements in the first line 410 during the first time period 465 from the first timing 463-1. For example, the display 320 may refrain from the emission of the remaining light-emitting elements (e.g., the light-emitting elements 414 and 416) different from the portion of light-emitting elements among the light-emitting elements in the first line 410. For example, the display 320 may refrain from the emission of the light-emitting elements in the second line 420 and may emit the portion of light-emitting elements in the first line 410 again. For example, the display 320 may emit the portion of light-emitting elements in the first line 410 during a second time period 475 again. For example, the second time period 475 may be extended from the first time period 465. For example, the second time period 475 may correspond to a time length 477 identified based on data of a memory cell for a light-emitting element in the second line 420. For example, the time length 477 may be identified according to a PWM scheme using a bit sequence, which is the data stored in the memory cell for the light-emitting element in the second line 420. In addition, for example, the first time period 465 may be identified according to the PWM scheme using a bit sequence, which is data stored in a memory cell for a light-emitting element in the first line 410. For example, the display 320 may emit a portion of light-emitting elements (e.g., the light-emitting elements 431, 432, 433, and 413) among the light-emitting elements in the third line 430 during the first time period 465. For example, the display 320 may emit the portion of light-emitting elements in the third line 430 during the first time period 465 from a third timing 463-3. For example, the display 320 may refrain from emission of the remaining light-emitting elements (e.g., the light-emitting elements 434 and 436) different from the portion of light-emitting elements among the light-emitting elements in the third line 430.

Referring to the above description, the display 320 may emit the portion of light-emitting elements in the first line 410 during the first time period 465 and the second time period 475. In other words, compared to the first mode, in the second mode, the display 320 may emit the light-emitting elements in the first line 410 for a longer time.

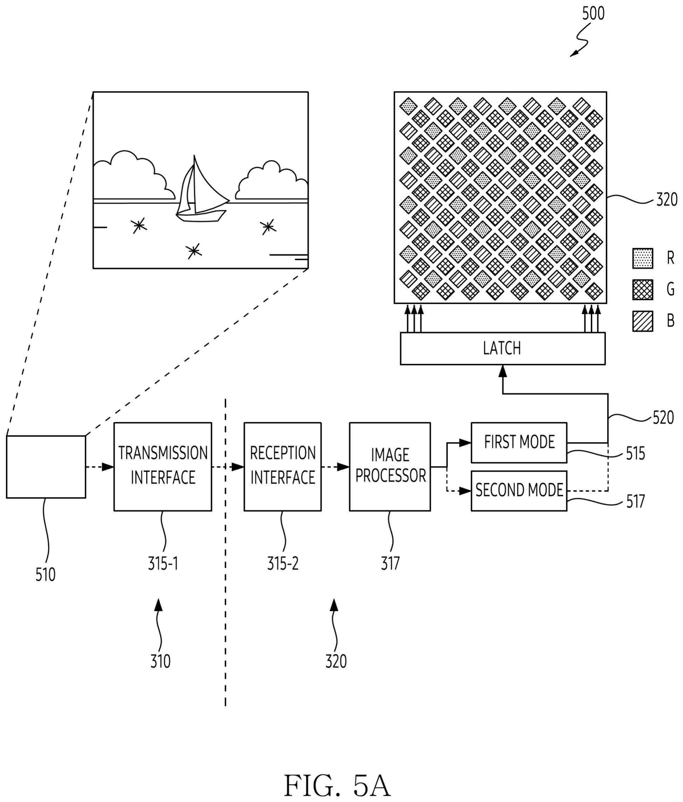

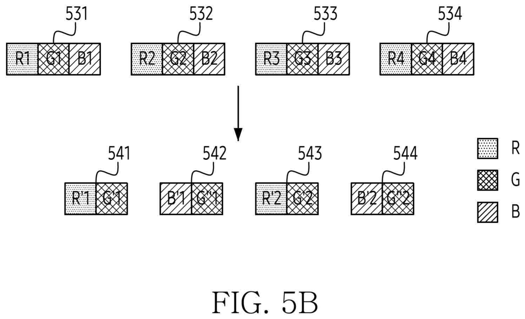

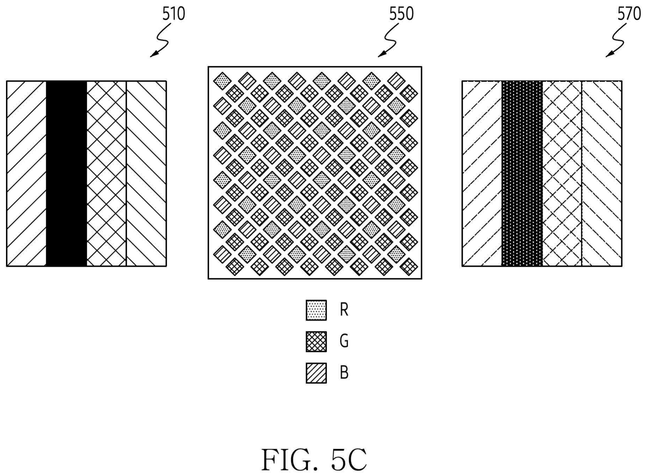

FIG. 5A illustrates an example of a block diagram for indicating a flow of displaying an image in a first mode. FIG. 5B illustrates an example of a method of converting data of an image in a first mode. FIG. 5C illustrates an example of a light-emitting state of light-emitting elements for displaying an image in a first mode.

A block diagram 500 of FIG. 5A may illustrate a flow of processing and displaying an image generated by the electronic device 101 of FIG. 3A in a first mode 515. Referring to the block diagram 500, the electronic device 101 may display an image 510 having a first resolution (e.g., 2560×2560) through a display 320.

For example, the block diagram 500 of FIG. 5A illustrates an example in which an image processor 317 is included in the display 320, but an embodiment of the present disclosure is not limited thereto. For example, the image processor 317 may be located outside the display 320. In a case that the image processor 317 is located outside the display 320, the display 320 may further include another interface for connecting the image processor 317 and a latch.

For example, a processor 310 may identify whether to display the image 510 in the first mode 515 of the first mode 515 and a second mode 517 of the electronic device 101. In the example, the first mode 515 of the electronic device 101 is described, but an embodiment of the present disclosure is not limited thereto. For example, the processor 310 may identify whether to display the image 510 in the first mode 515 of the processor 310 or the display 320. For example, in a case that the processor 310 identifies that the image 510 is to be displayed in the first mode 515, the processor 310 may generate a signal for instructing the display 320 to the first mode 515. For example, in a case that the processor 310 identifies that the image 510 is to be displayed in the first mode 515, the processor 310 may generate the image 510 having the first resolution that is implementable by the display 320.

For example, the processor 310 may transmit the signal for instructing the first mode 515 and the image 510 having the first resolution to the display 320 through a transmission interface 315-1. For example, the display 320 may obtain the signal and the image 510 having the first resolution through a reception interface 315-2. For example, the reception interface 315-2 may indicate an example of the interface 315 of FIG. 3A.

For example, the display 320 may be driven based on the first mode 515 instructed by the signal obtained through the reception interface 315-2. For example, the display 320 may be identified as being driven in the first mode 515. The first mode 515 and the second mode 517 of FIG. 5A may be a logical block for indicating a mode in which the electronic device 101 (or the processor 310, or the display 320) is driven.

For example, the display 320 may convert data of the image 510 having the first resolution. For example, the data may include RGB data. For example, the display 320 may convert the RGB data into RGBG data based on the image processor 317. For example, the display 320 may convert the 24-bit RGB data into 16-bit RG data or 16-bit BG data. Specific content associated with this may be referred to FIG. 5B.

Referring to FIG. 5B, the display 320 may convert RGB data 531, 532, 533, and 534 forming the image 510 having the first resolution based on an implementation state of a plurality of light-emitting elements of the display 320. For example, the plurality of light-emitting elements may be implemented in an RGBG sub pixel rendering structure. For example, the display 320 may convert the RGB data 531, 532, 533, and 534 into RGBG data 541, 542, 543, and 544. For example, the display 320 may convert the first RGB data 531 (e.g., R1, G1, and B1) into the first RG data 541 (e.g., R'1 and G'1). For example, the display 320 may convert the second RGB data 532 (e.g., R2, G2, and B2) into the first BG data 542 (e.g., B'1 and G"1). For example, the display 320 may convert the third RGB data 533 (e.g., R3, G3, and B3) into the second RG data 543 (e.g., R'2 and G'2). For example, the display 320 may convert the fourth RGB data 534 (e.g., R4, G4, and B4) into the second BG data 544 (e.g., B'2 and G"2). Referring to the above description, the display 320 may convert the RGB data configured with 24 bits into the RG data or the BG data, which are configured with 16 bits.

Referring back to FIG. 5A, the display 320 may emit the plurality of light-emitting elements of the display 320 based on a converted data 520. The converted data 520 may include the RGBG data. The display 320 may display the image 510 by emitting the plurality of light-emitting elements of the display 320 based on the converted data 520. Specific content associated with this may be referred to FIG. 5C.

Referring to FIG. 5C, the image 510 having the first resolution (e.g., 2560×2560), an example 550 in which the plurality of light-emitting elements of the display 320 emit based on the converted data 520, and a real image 570 displayed on a screen according to the emission are illustrated.

Referring to the example 550, the display 320 may emit the plurality of light-emitting elements of the display 320 based on the converted data 520 to display the image 510 having the first resolution (e.g., 2560×2560). For example, the display 320 may emit all of the plurality of light-emitting elements included in the display 320 based on the converted data 520. As the plurality of light-emitting elements emit as in the example 550, the real image 570 may be displayed on the screen of the display 320. For example, the real image 570 may have the first resolution. Comparing the image 510 with the real image 570, the image 510 may have the first resolution based on the RGB data, and the real image 570 may have the first resolution based on the RGBG data. For example, the image 510 may have a resolution of 2560 RGB×2560. For example, the real image 570 may have a resolution of 2560 RG/BG×2560.

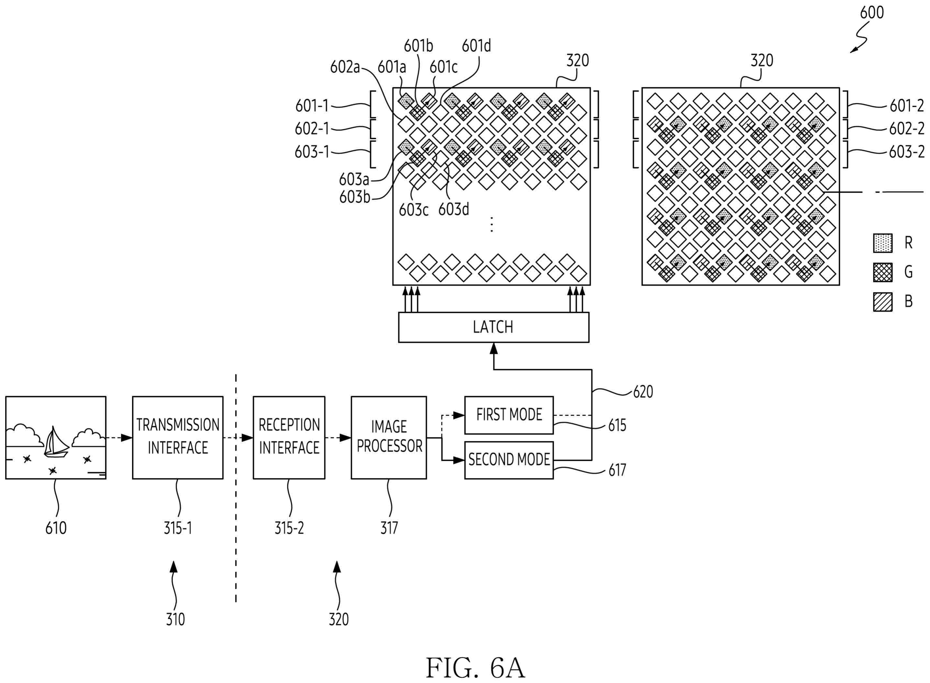

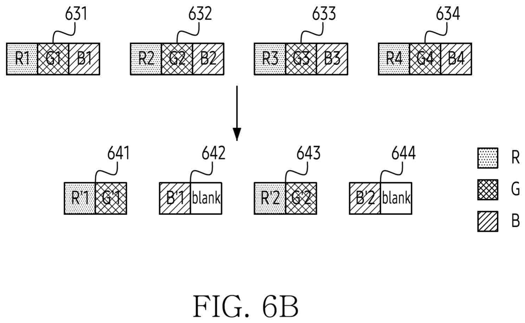

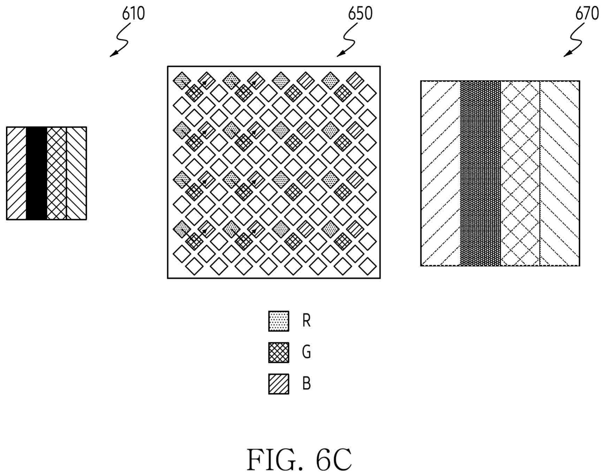

FIG. 6A illustrates an example of a block diagram for indicating a flow of displaying an image in a second mode. FIG. 6B illustrates an example of a method of converting data of an image in a second mode. FIG. 6C illustrates an example of a light-emitting state of light-emitting elements for displaying an image in a second mode.

A block diagram 600 of FIG. 6A may indicate a flow of processing and displaying an image generated by the electronic device 101 of FIG. 3A in a second mode 617. Referring to the block diagram 600, the electronic device 101 may display an image 610 having a second resolution (e.g., 1280×1280) through a display 320.

For example, the block diagram 600 of FIG. 6A illustrates an example in which an image processor 317 is included in the display 320, but an embodiment of the present disclosure is not limited thereto. For example, the image processor 317 may be located outside the display 320. In a case that the image processor 317 is located outside the display 320, the display 320 may further include another interface for connecting the image processor 317 and a latch.

For example, a processor 310 may identify whether to display the image 610 in the second mode 617 of a first mode 615 and the second mode 617 of the electronic device 101. In the example, the second mode 617 of the electronic device 101 is described, but an embodiment of the present disclosure is not limited thereto. For example, the processor 310 may identify whether to display the image 610 in the second mode 617 of the processor 310 or the display 320. For example, in a case that the processor 310 identifies that the image 610 is to be displayed in the second mode 617, the processor 310 may generate a signal for instructing the display 320 to the second mode 617. For example, in a case that the processor 310 identifies that the image 610 is to be displayed in the second mode 617, the processor 310 may generate the image 610 having the second resolution that is implementable by the display 320.

For example, the processor 310 may transmit the signal for instructing the second mode 617 and the image 610 having the second resolution to the display 320 through a transmission interface 315-1. For example, the display 320 may obtain the signal and the image 610 having the second resolution through a reception interface 315-2. For example, the reception interface 315-2 may indicate an example of the interface 315 of FIG. 3A.

For example, the display 320 may be driven based on the second mode 617 instructed by the signal obtained through the reception interface 315-2. For example, the display 320 may be identified as being driven in the second mode 617. The first mode 615 and the second mode 617 of FIG. 6A may be a logical block for indicating a mode in which the electronic device 101 (or the processor 310, or the display 320) is driven.

For example, the display 320 may convert data of the image 610 having the second resolution. For example, the data may include RGB data. For example, the display 320 may convert the RGB data into RGB data and blank data based on the image processor 317. For example, the blank data may indicate a designated bit sequence or a state that data is off. For example, in a case that a bit sequence is configured with 8 bits, the designated bit sequence may be '00000000'. For example, the display 320 may convert the 24-bit RGB data into 16-bit RG data or B data and blank data. Specific content associated with this may be referred to FIG. 6B.

Referring to FIG. 6B, the display 320 may convert RGB data 631, 632, 633, and 634 forming the image 610 having the second resolution based on an implementation state of a plurality of light-emitting elements of the display 320. For example, the plurality of light-emitting elements may be implemented in an RGBG sub pixel rendering structure. For example, the display 320 may convert the RGB data 631, 632, 633, and 634 into RGB data 641, 642, 643, and 644. For example, the converted RGB data 641, 642, 643, and 644 may include RG data and blue/blank (BB) data. For example, the display 320 may convert the first RGB data 631 (e.g., R1, G1, and B1) into the first RG data 641 (e.g., R'1 and G'1). For example, the display 320 may convert the second RGB data 632 (e.g., R2, G2, and B2) into the first BB data 642 (e.g., B'1 and blank). For example, the display 320 may convert the third RGB data 633 (e.g., R3, G3, and B3) into the second RG data 643 (e.g., R'2 and G'2). For example, the display 320 may convert the fourth RGB data 634 (e.g., R4, G4, and B4) into the second BB data 644 (e.g., B'2 and blank). Referring to the above description, the display 320 may convert the RGB data configured with 24 bits into the RG data configured with 16 bits or the B data and the blank data.

Referring back to FIG. 6A, the display 320 may identify a memory cell in which a converted data 620 is to be stored. For example, by using mapping information based on the image processor 317, the display 320 may identify the memory cell for a light-emitting element to emit based on the converted data 620. The mapping information may define a mapping relationship between the data 620 converted from the image 610 having the second resolution and the plurality of light-emitting elements of the display 320. For example, the mapping information may include a look-up table (LUT).

For example, the display 320 may identify light-emitting elements 601-1a in a first line 601-1 to emit the first RG data 641 based on the mapping information, and may store R data and G data in a memory cell of each of light-emitting elements 601a and 601b. For example, the display 320 may identify light-emitting elements 601c and 601d in the first line 601-1 to emit the first BB data 642 based on the mapping information, and may store B data and blank data in a memory cell of each of the light-emitting elements 601c and 601d. For example, the R, G, B, and blank data may include a bit sequence configured with 8 bits, which is a storage capacity of the memory cell. For example, the display 320 may identify light-emitting elements 603a and 603b in a third line 603-1 to emit the second RG data 643 based on the mapping information, and may store R data and G data in a memory cell of each of the light-emitting elements 603a and 603b. For example, the display 320 may identify light-emitting elements 603c and 603d in the third line 603-1 to emit the second BB data 644 based on the mapping information, and may store B data and blank data in a memory cell of each of the light-emitting elements 603c and 603d. For example, the R, G, B, and blank data may include a bit sequence configured with 8 bits, which is the storage capacity of the memory cell.

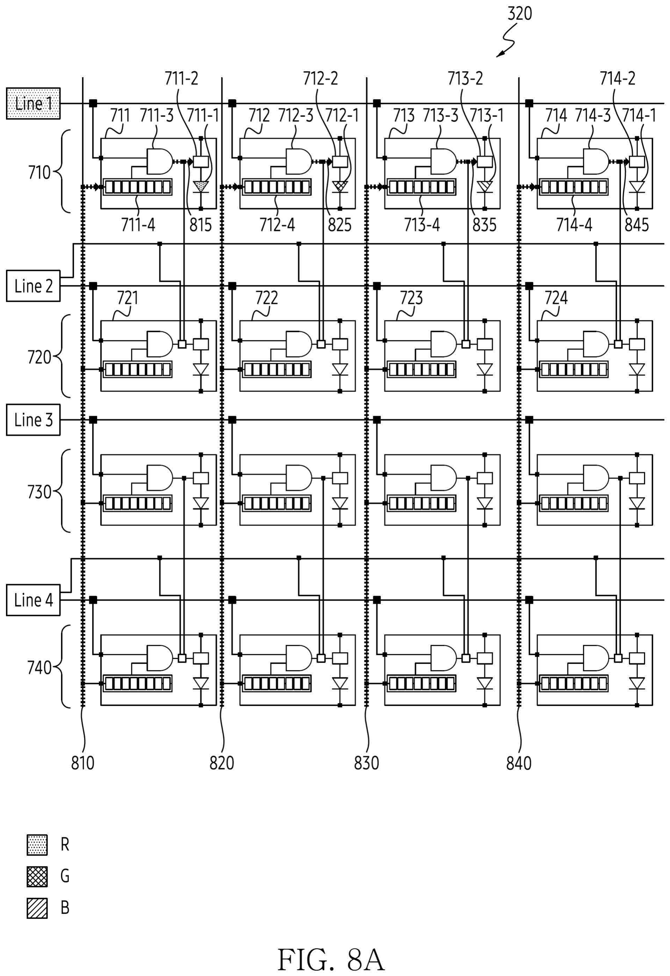

For example, the display 320 may identify data to be stored in a memory cell for a light-emitting element in a line that refrains from (or omits) emission based on the mapping information. In the example, the display 320 may identify the first line 601-1 and the third line 603-1 connected to a light-emitting element for emission, and may identify a second line 602-1 that refrains from (or delays, skips, or does not perform) emission. For example, the display 320 may identify a light-emitting element 602a in the second line 602-1 connected to a light-emitting element 601a in the first line 601-1 based on the mapping information. For example, the display 320 may store data to be used for the light-emitting element 601a in the first line 601-1 that additionally emits (e.g., the second time period) while refraining from emission of the second line 602-1, in a memory cell for the light-emitting element 602a. The data stored in the memory cell for the light-emitting element 602a may be identified based on the mapping information. For example, the display 320 may identify data to be stored in the memory cell for the light-emitting element 602a based on data (e.g., the first RG data 641) stored in a memory cell for the light-emitting element 601a while the first line 601-1 emits (e.g., the first time period). Specific content associated with this is described in FIGS. 8A to 9B below.

Referring back to FIG. 6A, the display 320 may emit a portion of light-emitting elements among the plurality of light-emitting elements of the display 320 based on the converted data 620. The converted data 620 may include the RGB data and the blank data. The display 320 may display the image 610 by emitting the portion of light-emitting elements among the plurality of light-emitting elements of the display 320 based on the converted data 620. Specific content associated with this may be referred to FIG. 6C.

Referring to FIG. 6C, the image 610 having the second resolution (e.g., 1280×1280), an example 650 in which the plurality of light-emitting elements of the display 320 emit based on the converted data 620, and a real image 670 displayed on a screen according to the emission are illustrated.

Referring to the example 650, the display 320 may emit the portion of light-emitting elements among the plurality of light-emitting elements of the display 320 based on the converted data 620 to display the image 610 having the second resolution (e.g., 1280× 1280). For example, the display 320 may emit all of the plurality of light-emitting elements included in the display 320 based on the converted data 620. As the plurality of light-emitting elements emit as in the example 650, the real image 670 may be displayed on the screen of the display 320. For example, the real image 670 may have the second resolution. Comparing the image 610 with the real image 670, the image 610 may have the second resolution based on the RGB data, and the real image 670 may have substantially the second resolution based on the RGB data (and the blank data). For example, the image 610 may have a resolution of 1280×1280. For example, the real image 670 may have a resolution of 1280× 1280.

Referring to FIGS. 5C and 6C, since the portion of light-emitting elements among all of the light-emitting elements included in the display 320 emit, although a size of the screen viewed from the outside is the same as the real image 570 of FIG. 5C, the resolution of the real image 670 may be different from the resolution of the real image 570. For example, the real image 570 of FIG. 5C may have a resolution of 2560×2560. In contrast, the real image 670 of FIG. 6C may have a resolution of, for example, 1280× 1280.

In FIG. 6A, an example in which the resolution of the image generated by the processor 310 is the second resolution as the second mode is identified is described, but an embodiment of the present disclosure is not limited thereto. For example, the processor 310 may also generate an image having the first resolution (e.g., 2560×2560) different from the second resolution. Accordingly, the display 320 may convert a resolution of the image from the first resolution to the second resolution. For example, the display 320 may perform a scale-down conversion from the first resolution to the second resolution.

In FIG. 6A, an example in which the lines 601-1 and 603-1 in which lines (hereinafter, an emitting line) associated with the light-emitting elements for displaying the image 610 are configured in an RGBG order from the left side are identified is described, but an embodiment of the present disclosure is not limited thereto. For example, based on the mapping information, the display 320 may identify a plurality of lines including the second line 602-2 in which the lines associated with the light-emitting elements for displaying the image 610 are configured in the RGBG order from the right side. Accordingly, based on the mapping information, the display 320 may identify lines 601-2 and 603-2 (hereinafter, a non-emitting line) associated with light-emitting elements not displaying the image 610 (or refraining from emission).

In FIG. 6A, an example of the display 320 in which one emitting line and one non-emitting line are alternately implemented is described, but an embodiment of the present disclosure is not limited thereto. For example, in the display 320, based on the mapping information, two emitting lines and two non-emitting lines may also be implemented alternately.

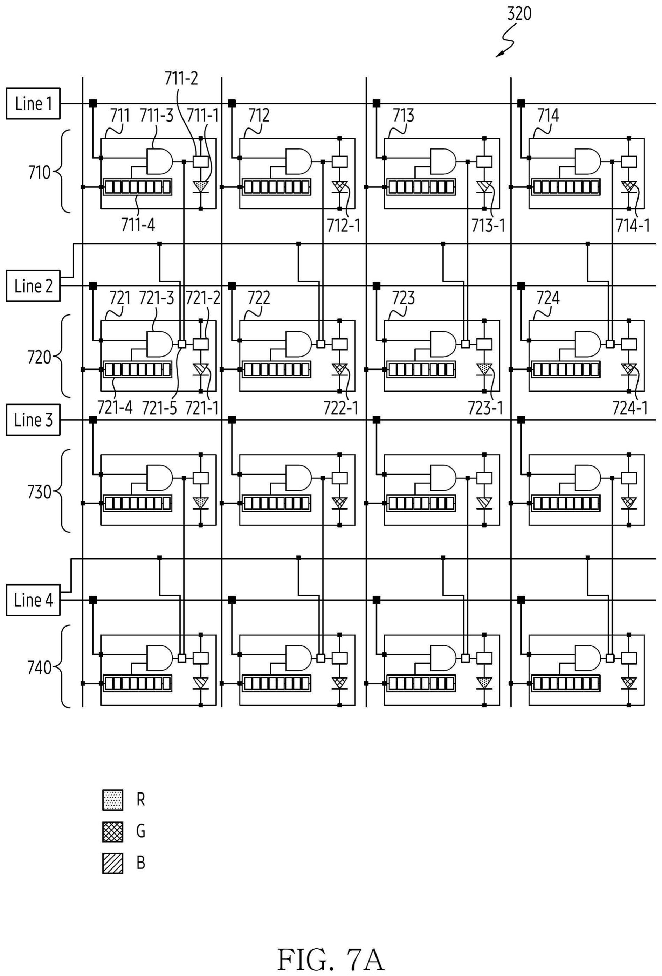

FIG. 7A illustrates exemplary circuitry for a display that drives a plurality of lines in a first mode. The display of FIG. 7A may indicate an example of the display 320 of FIG. 3A.

Referring to FIG. 7A, the display 320 may include a plurality of sub pixels 711, 712, 713, 714, 721, 722, 723, and 724. The plurality of sub pixels may be connected to a specific line. For example, the first sub pixel 711, the second sub pixel 712, the third sub pixel 713, and the fourth sub pixel 714 may be connected to a first line 710. For example, the fifth sub pixel 721, the sixth sub pixel 722, the seventh sub pixel 723, and the eighth sub pixel 724 may be connected to a second line 720.

For example, each of the sub pixels may include a light-emitting element, a switch, circuitry for PWM, and a memory cell. For example, the first sub pixel 711 may include a light-emitting element 711-1 for displaying a red (R) color, a switch 711-2, circuitry 711-3 for the PWM, and a memory cell 711-4.

For example, the light-emitting element 711-1 may be connected to the circuitry 711-3 through the switch 711-2. For example, the switch 711-2 may connect the circuitry 711-3 and the light-emitting element 711-1 at a timing at which the first sub pixel 711 (or the light-emitting element 711-1) starts to emit. For example, the timing may include a timing at which a time period during which the first line 710 connected to the first sub pixel 711 or the light-emitting element 711-1 emits starts. For example, the switch 711-2 may disconnect the connection between the circuitry 711-3 and the light-emitting element 711-1 at a timing at which the first sub pixel 711 or the light-emitting element 711-1 ends to emit. For example, the timing may include a timing at which a time period during which the first line 710 connected to the first sub pixel 711 or the light-emitting element 711-1 emits ends (or expires). For example, the display 320 may control a connection state of the switch for each line. For example, the display 320 may control a plurality of switches in the first line 710. The plurality of switches may include the switch 711-2.

For example, the circuitry 711-3 may generate a pulse based on data stored in the memory cell 711-4. For example, the circuitry 711-3 may obtain the data from the memory cell 711-4. For example, the data may be an 8-bit bit sequence. For example, the memory cell 711-4 may store the 8-bit bit sequence. However, an embodiment of the present disclosure is not limited thereto, and a bit sequence having another length may also be stored in the memory cell 711-4. For example, the display 320 may control a plurality of circuitry for each line based on a control signal. For example, the control signal may be a signal for driving the plurality of circuitry in the first line 710 at a timing at which the first line 710 is driven. For example, the circuitry 711-3 may perform a generation of the pulse based on the control signal.

For example, the fifth sub pixel 721 may include a light-emitting element 721-1 for displaying a blue (B) color, a switch 721-2, circuitry 721-3 for PWM, a memory cell 721-4, and a line switch 721-5.

For example, the light-emitting element 721-1 may be connected to the circuitry 721-3 through the switch 721-2. For example, the switch 721-2 may connect the circuitry 721-3 and the light-emitting element 721-1 at a timing at which the fifth sub pixel 721 (or the light-emitting element 721-1) starts to emit. For example, the timing may include a timing at which a time period during which the second line 720 connected to the fifth sub pixel 721 or the light-emitting element 721-1 emits starts. For example, the second line 720 may be a line continuous with the first line 710. For example, the switch 721-2 may disconnect a connection between the circuitry 721-3 and the light-emitting element 721-1 at a timing at which the fifth sub pixel 721 or the light-emitting element 721-1 ends to emit. For example, the timing may include a timing at which a time period during which the second line 720 connected to the fifth sub pixel 721 or the light-emitting element 721-1 emits ends (or expires). For example, the display 320 may control the connection state of the switch for each line. For example, the display 320 may control a plurality of switches in the second line 720. The plurality of switches may include the switch 721-2.

For example, the circuitry 721-3 may generate a pulse based on data stored in the memory cell 721-4. For example, the circuitry 721-3 may obtain the data from the memory cell 721-4. For example, the data may be an 8-bit bit sequence. For example, the memory cell 721-4 may store the 8-bit bit sequence. However, an embodiment of the present disclosure is not limited thereto, and a bit sequence having another length may also be stored in the memory cell 721-4. For example, the display 320 may control the plurality of circuitry for each line based on a control signal. For example, the control signal may be a signal for driving the plurality of circuitry in the second line 720 at a timing at which the second line 720 is driven. For example, the circuitry 721-3 may perfrom generation of the pulse based on the control signal.

For example, the line switch 721-5 may be a switch for connecting the first line 710 and the second line 720. For example, in the first mode, the line switch 721-5 may be in a state of disconnecting the connection between the first line 710 and the second line 720.

Referring to FIG. 7A, the display 320 may sequentially emit light-emitting elements in a plurality of lines 710, 720, 730, and 740. For example, the display 320 may emit light-emitting elements 711-1, 712-1, 713-1, and 714-1 in the first line 710 during a first time period. For example, the display 320 may emit light-emitting elements 721-1, 722-1, 723-1, and 724-1 in the second line 720 during the first time period. For example, the light-emitting elements 711-1, 712-1, 713-1, and 714-1 in the first line 710 may emit during the first time period from a first timing. The light-emitting elements 721-1, 722-1, 723-1, and 724-1 in the second line 720 may emit during the first time period from a second timing that has passed by a designated time interval from the first timing. For example, the designated time interval may correspond to a period of a horizontal synchronization signal that triggers a driving of a line. In addition, the display 320 may emit the light-emitting elements in the third line 730 and the light-emitting elements in the fourth line 740.

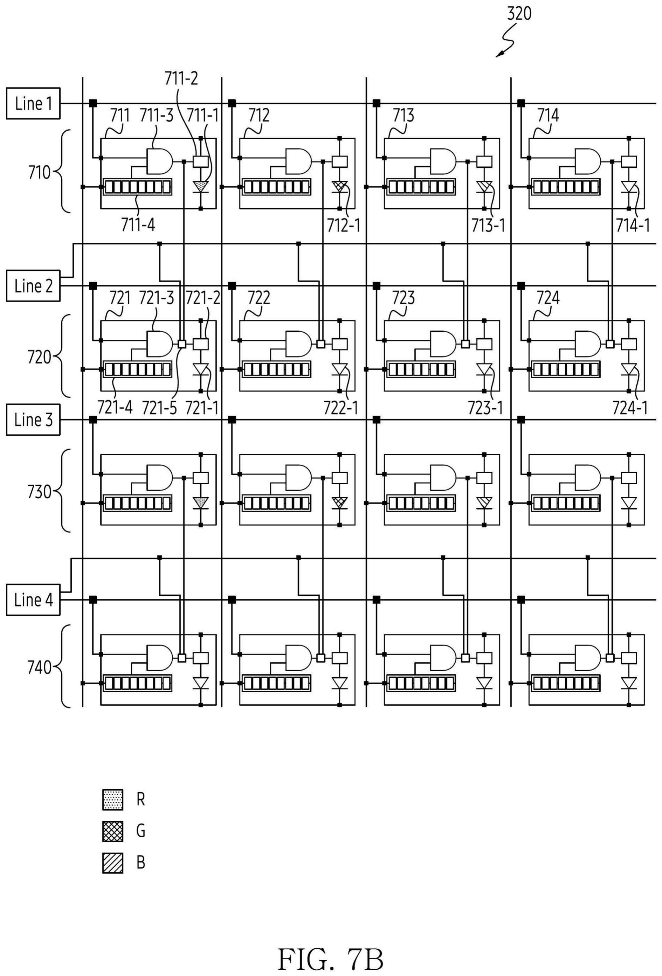

FIG. 7B illustrates exemplary circuitry for a display that drives a plurality of lines in a second mode.

Referring to FIG. 7B, the display 320 may include a plurality of sub pixels 711, 712, 713, 714, 721, 722, 723, and 724. The plurality of sub pixels may be connected to a specific line. For example, the first sub pixel 711, the second sub pixel 712, the third sub pixel 713, and the fourth sub pixel 714 may be connected to a first line 710. For example, the fifth sub pixel 721, the sixth sub pixel 722, the seventh sub pixel 723, and the eighth sub pixel 724 may be connected to a second line 720. A structure and a connection state of a sub pixel of FIG. 7B may be understood to be substantially the same as the structure and the connection state of the sub pixel of FIG. 7A. Accordingly, in FIG. 7B below, overlapping contents are omitted.

Referring to FIG. 7B, the display 320 may drive a portion of lines among the plurality of lines 710, 720, 730, and 740. For example, the display 320 may emit a portion of light-emitting elements in the first line 710 and a portion of light-emitting elements in the third line 730. For example, the display 320 may emit a portion of light-emitting elements 711-1, 712-1, and 713-1 among light-emitting elements 711-1, 712-1, 713-1, and 714-1 in the first line 710 during a first time period. For example, the display 320 may refrain from (or may delay, skip, or may not perform) emission of the light-emitting element 714-1 of the fourth sub pixel 714 during the first time period during which the portion of light-emitting elements 711-1, 712-1, and 713-1 in the first line 710 emits.

Referring to FIG. 7B, a line switch 721-5 of the fifth sub pixel 721 may be a switch for connecting the first line 710 and the second line 720. For example, in the second mode, the line switch 721-5 may be in a state of connecting the first line 710 and the second line 720. For example, the display 320 may control line switches for each line by using a control signal for changing the connection state of the line switch 721-5. For example, the display 320 may control line switches of the second line 720 based on the control signal. For example, the display 320 may change the connection state of the line switch 721-5 from a state of disconnecting the first line 710 and the second line 720 to a state of connecting the first line 710 and the second line 720 before a timing of starting to emit the second line 720 based on the control signal. For example, the timing at which the second line 720 starts to emit may be the timing at which the time length 477 of FIG. 4C starts. For example, the timing at which the second line 720 starts to emit may coincide with a timing at which emission of the first time period during which the portion of light-emitting elements 711-1, 712-1, and 713-1 in the first line 710 emits ends.

For example, the display 320 may refrain from emission of light-emitting elements 721-1, 722-1, 723-1, and 724-1 in the second line 720, and may emit the first line 710 again using the second line 720. For example, the display 320 may identify a portion of light-emitting elements among the light-emitting elements 721-1, 722-1, 723-1, and 724-1 in the second line 720. For example, the second line 720 may be a line continuous with the first line 710. For example, the display 320 may identify the portion of light-emitting elements 721-1, 722-1, and 723-1 in the second line 720 connected to the portion of light-emitting elements 711-1, 712-1, and 713-1 in the first line 710. The display 320 may emit the portion of light-emitting elements 711-1, 712-1, and 713-1 in the first line 710 for a second time period different from the first time period by using data stored in a memory cell of each of the portion of light-emitting elements 721-1, 722-1, and 723-1 in the second line 720. For example, the second time period may be shorter than the first time period. For example, the display 320 may emit the portion of light-emitting elements 711-1, 712-1, and 713-1 in the first line 710 during the second time period extended from the first time period in which the portion of light-emitting elements 711-1, 712-1, and 713-1 in the first line 710 emits. For example, a timing at which the second time period starts may be triggered from the timing at which the emission of the first time period during which the portion of light-emitting elements 711-1, 712-1, and 713-1 in the first line 710 emits ends.

As described above, the display 320 may emit the portion of light-emitting elements among light-emitting elements in the third line 730. In addition, the display 320 may refrain from emission of light-emitting elements in the fourth line 740 continuous with the third line 730 and connected to the third line 730. The display 320 may emit the portion of light-emitting elements in the third line 730 using the fourth line 740.

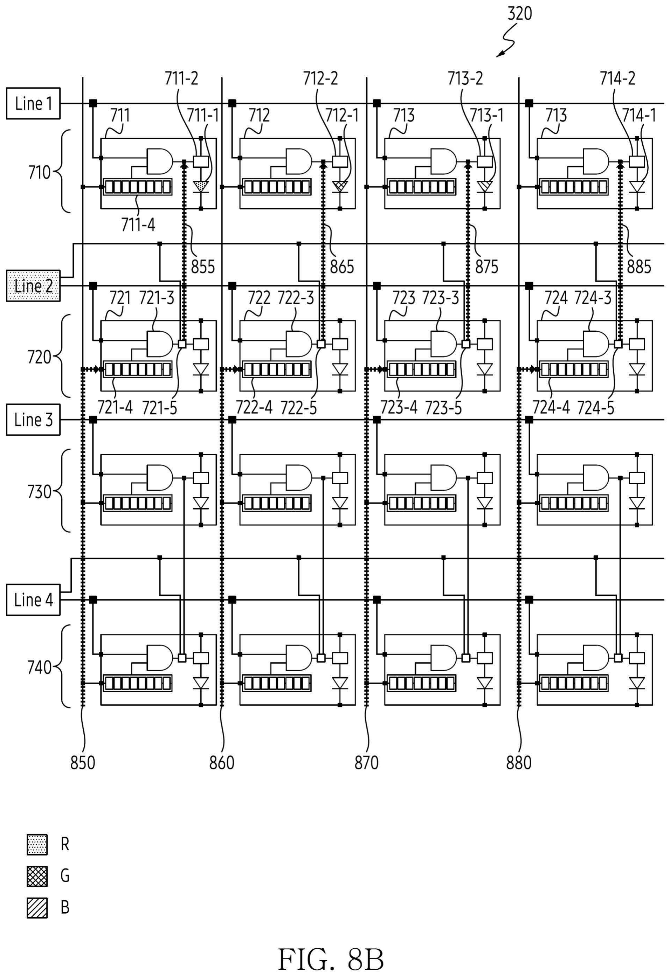

FIGS. 8A and 8B illustrate an example of a method of driving a plurality of lines having a first connection state in a second mode.

Referring to FIGS. 8A and 8B, a display 320 may include a plurality of sub pixels 711, 712, 713, 714, 721, 722, 723, and 724. The plurality of sub pixels may be connected to a specific line. For example, the first sub pixel 711, the second sub pixel 712, the third sub pixel 713, and the fourth sub pixel 714 may be connected to a first line 710. For example, the fifth sub pixel 721, the sixth sub pixel 722, the seventh sub pixel 723, and the eighth sub pixel 724 may be connected to a second line 720. A structure and a connection state of a sub pixel of FIGS. 8A and 8B may be understood to be substantially the same as the structure and the connection state of the sub pixel of FIG. 7A. Therefore, in FIGS. 8A and 8B below, overlapping contents are omitted.

The first connection state of FIGS. 8A and 8B may indicate a state in which sub pixels located in the same column among sub pixels of continuous lines (e.g., the first line 710 and the second line 720) are connected to each other. For example, the first sub pixel 711 of the first line 710 and the fifth sub pixel 721 of the second line 720 may be connected to each other. For example, the second sub pixel 712 of the first line 710 and the sixth sub pixel 722 of the second line 720 may be connected to each other. For example, the third sub pixel 713 of the first line 710 and the seventh sub pixel 723 of the second line 720 may be connected to each other. For example, the fourth sub pixel 714 of the first line 710 and the eighth sub pixel 724 of the second line 720 may be connected to each other. The column may be defined in a second direction perpendicular to a first direction in which sub pixels connected to one line are disposed. For example, the second direction may indicate a direction in which a plurality of lines are disposed. For example, the direction in which the plurality of lines are disposed may indicate a direction from the first line 710 toward the fourth line 740. For example, a row may be defined in the first direction in which the sub pixels connected to the one line are disposed.

FIG. 8A illustrates an example of driving sub pixels of the first line 710 in the second mode.

Referring to FIG. 8A, the display 320 may store data in a memory cell of each of the first sub pixel 711, the second sub pixel 712, the third sub pixel 713, and the fourth sub pixel 714 of the first line 710. For example, the display 320 may store a bit sequence in a memory cell 711-4 using a path 810. For example, the bit sequence may include 8-bit data for emitting a red-colored light-emitting element 711-1. For example, the display 320 may store a bit sequence in a memory cell 712-4 using a path 820. For example, the bit sequence may include 8-bit data for emitting a green-colored light-emitting element 712-1. For example, the display 320 may store a bit sequence in a memory cell 713-4 using a path 830. For example, the bit sequence may include 8-bit data for emitting a blue-colored light-emitting element 713-1. For example, the display 320 may store a bit sequence in a memory cell 714-4 using a path 840. For example, the bit sequence may include 8-bit data to refrain from (or delay, skip, or not perform) emission of a green-colored light-emitting element 714-1. For example, the bit sequence stored in the memory cell 714-4 may be a designated bit sequence. For example, the designated bit sequence may be '00000000'. Alternatively, the display 320 may not store data in the memory cell 714-4.

For example, the display 320 may generate a pulse according to a PWM scheme by using data stored in the memory cell. For example, the display 320 may control driving of circuitry for PWM of the first line 710. For example, circuitry 711-3 of the first sub pixel 711 may generate a pulse according to the PWM scheme based on the bit sequence of the memory cell 711-4. The pulse may indicate a signal generated based on the bit sequence. A length (or a width) of the pulse may be associated with a time during which the light-emitting element 711-1 emits. For example, circuitry 712-3 of the second sub pixel 712 may generate a pulse according to the PWM scheme based on the bit sequence of the memory cell 712-4. For example, circuitry 713-3 of the third sub pixel 713 may generate a pulse according to the PWM scheme based on the bit sequence of the memory cell 713-4. For example, circuitry 714-3 of the fourth sub pixel 714 may generate a pulse according to the PWM scheme based on the bit sequence of the memory cell 714-4. For example, the pulse generated by the circuitry 714-3 may be a signal for not performing emission of a light-emitting element.

For example, the display 320 may emit a portion of light-emitting elements by controlling switches of a line. For example, the display 320 may emit the light-emitting element 711-1 based on the pulse transmitted through a path 815 formed by controlling a switch 711-2 of the first sub pixel 711. For example, the display 320 may emit the light-emitting element 712-1 based on the pulse transmitted through a path 825 formed by controlling a switch 712-2 of the second sub pixel 712. For example, the display 320 may emit the light-emitting element 713-1 based on the pulse transmitted through a path 835 formed by controlling a switch 713-2 of the third sub pixel 713. For example, the display 340 may refrain from the emission of the light-emitting element 714-1 based on the pulse transmitted through a path 845 formed by controlling a switch 714-2 of the fourth sub pixel 714. In FIG. 8A, an example in which the path 845 is formed by controlling the switch 714-2 based on a control signal by the display 320 is illustrated, but an embodiment of the present disclosure is not limited thereto. For example, the display 320 may control a path not to be formed by using a switch associated with a light-emitting element that will not be emitted in the first line 710. For example, by disconnecting a connection between the circuitry 714-3 and the light-emitting element 714-1 through the switch 714-2, the display 320 may control the path 845 not to be formed.

FIG. 8B illustrates an example of driving sub pixels of the second line 720 in the second mode. The example of FIG. 8B may indicate an example of sub pixels driven by a display after starting to drive the first line 710 in the example of FIG. 8A.

Referring to FIG. 8B, the display 320 may store data in a memory cell of each of the fifth sub pixel 721, the sixth sub pixel 722, the seventh sub pixel 723, and the eighth sub pixel 724 of the second line 720. For example, the display 320 may store a bit sequence in a memory cell 721-4 using a path 850. For example, the bit sequence may include 8-bit data for emitting the red-colored light-emitting element 711-1 in the first line 710. For example, the display 320 may identify the bit sequence based on mapping information. For example, the display 320 may store a bit sequence in the memory cell 721-4 by identifying data associated with data stored in the memory cell 711-4 for emission of the light-emitting element 711-1 in the first line 710 based on the mapping information. For example, the display 320 may store a bit sequence in a memory cell 722-4 using a path 860. For example, the bit sequence may include 8-bit data for emitting the green-colored light-emitting element 712-1 in the first line 710. For example, the display 320 may store a bit sequence in a memory cell 723-4 using a path 870. For example, the bit sequence may include 8-bit data for emitting the blue-colored light-emitting element 713-1 in the first line 710. For example, the display 320 may store a bit sequence in a memory cell 724-4 using a path 880. For example, the bit sequence may include 8-bit data to refrain from the emission of the green-colored light-emitting element 714-1 in the first line 710. For example, the bit sequence stored in the memory cell 724-4 may be a designated bit sequence. For example, the designated bit sequence may be '00000000'. Alternatively, the display 320 may not store data in the memory cell 724-4.

For example, the display 320 may generate a pulse according to the PWM scheme by using data stored in the memory cell. For example, the display 320 may control driving of circuitry for PWM of the second line 720. For example, circuitry 721-3 of the fifth sub pixel 721 may generate a pulse according to the PWM scheme based on the bit sequence of the memory cell 721-4. The pulse may indicate a signal generated based on the bit sequence. A length (or a width) of the pulse may be associated with a time during which the light-emitting element 711-1 in the first line 710 emits. For example, circuitry 722-3 of the sixth sub pixel 722 may generate a pulse according to the PWM scheme based on the bit sequence of the memory cell 722-4. For example, circuitry 723-3 of the seventh sub pixel 723 may generate a pulse according to the PWM scheme based on the bit sequence of the memory cell 723-4. For example, circuitry 724-3 of the eighth sub pixel 724 may generate a pulse according to the PWM scheme based on the bit sequence of the memory cell 724-4.

For example, the display 320 may emit light-emitting elements by controlling line switches and switches. For example, the display 320 may emit the light-emitting element 711-1 based on the pulse transmitted through a path 855 formed by controlling a line switch 721-5 of the fifth sub pixel 721 and the switch 711-2 of the first sub pixel 711. For example, the display 320 may emit the light-emitting element 712-1 based on the pulse transmitted through a path 865 formed by controlling a line switch 722-5 of the sixth sub pixel 722 and the switch 712-2 of the second sub pixel 712. For example, the display 320 may emit the light-emitting element 713-1 based on the pulse transmitted through a path 875 formed by controlling a line switch 723-5 of the seventh sub pixel 723 and the switch 713-2 of the third sub pixel 713. For example, the display 340 may refrain from the emission of the light-emitting element 714-1 based on the pulse transmitted through a path 885 formed by controlling a line switch 724-5 of the eighth sub pixel 724 and the switch 714-2 of the fourth sub pixel 714. In FIG. 8B, an example in which the path 885 is formed by controlling the line switch 724-5 and the switch 714-2 based on a control signal by the display 320 is illustrated, but an embodiment of the present disclosure is not limited thereto. For example, the display 320 may control a path not to be formed by using a switch associated with a light-emitting element that will not be emitted in the first line 710 or a line switch of the second line 720. For example, by disconnecting a connection between the circuitry 724-3 of the eighth sub pixel 724 and the light-emitting element 714-1 of the fourth sub pixel 714 through the switch 714-2, the display 320 may control the path 885 not to be formed. Alternatively, the display 320 may control the path 885 not to be formed by disconnecting a connection between the eighth sub pixel 724 and the fourth sub pixel 714 through the line switch 724-5.

Referring to FIGS. 8A and 8B, the display 320 may emit, through a memory stored in memory cells in the sub pixels of the first line 710, in the second mode, a portion of light-emitting elements 711-1, 712-1, and 713-1 among the light-emitting elements 711-1, 712-1, 713-1, and 714-1 of the first line 710. Each of the portion of light-emitting elements 711-1, 712-1, and 713-1 may emit during a first time period. For example, the first time period may be identified based on data stored in a memory cell for each of the portion of light-emitting elements 711-1, 712-1, and 713-1.

In addition, the display 320 may refrain from emission of the light-emitting elements in the second line 720 in the second mode. The display 320 may omit the emission of the light-emitting elements in the second line 720, and may emit the portion of light-emitting elements 711-1, 712-1, and 713-1 in the first line 710 again by using the second line 720. For example, each of the portion of light-emitting elements 711-1, 712-1, and 713-1 may additionally emit during a second time period shorter than the first time period. The second time period may be identified based on data stored in a memory cell for each of a portion of light-emitting elements 721-1, 722-1, and 723-1 in the second line 720. For example, the second time period may be extended from the first time period.

Referring to the above description, the display 320 may emit the portion of light-emitting elements 711-1, 712-1, and 713-1 in the first line 710 during the first time period (e.g., the first time period 465 of the example 470 of FIG. 4C) and the second time period (e.g., the second time period 475 of the example 470 of FIG. 4C). In other words, compared to the first mode, in the second mode, the display 320 may emit the light-emitting elements in the first line 710 for a longer time.

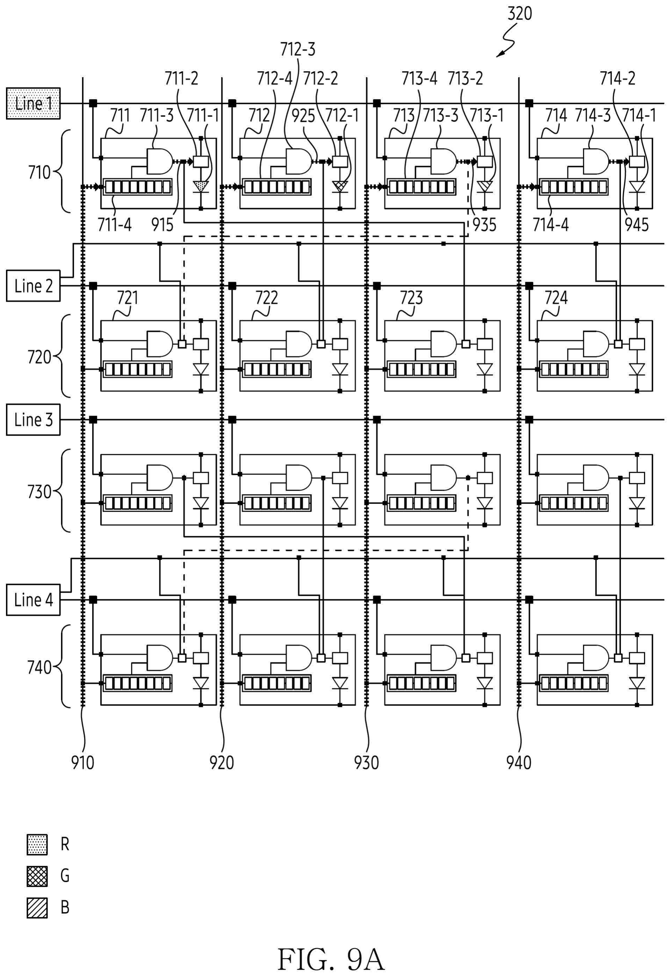

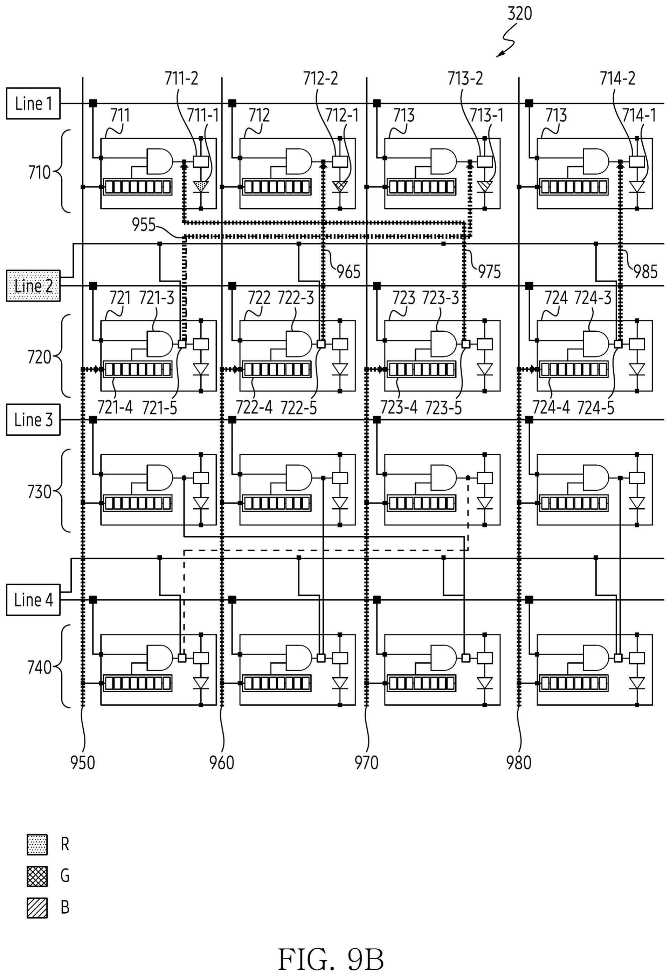

FIGS. 9A and 9B illustrate an example of a method of driving a plurality of lines having a second connection state in a second mode.

Referring to FIGS. 9A and 9B, a display 320 may include a plurality of sub pixels 711, 712, 713, 714, 721, 722, 723, and 724. The plurality of sub pixels may be connected to a specific line. For example, the first sub pixel 711, the second sub pixel 712, the third sub pixel 713, and the fourth sub pixel 714 may be connected to the first line 710. For example, the fifth sub pixel 721, the sixth sub pixel 722, the seventh sub pixel 723, and the eighth sub pixel 724 may be connected to a second line 720. A structure and a connection state of a sub pixel of FIGS. 9A and 9B may be understood to be substantially the same as the structure and the connection state of the sub pixel of FIG. 7A. Therefore, in FIGS. 9A and 9B below, overlapping contents are omitted.

The second connection state of FIGS. 9A and 9B may indicate a state that sub pixels, which are located in different columns, are connected to a portion of sub pixels among the sub pixels of continuous lines (e.g., the first line 710 and the second line 720) are connected to each other. For example, the first sub pixel 711 of the first line 710 and the seventh sub pixel 723 of the second line 720 may be connected to each other. For example, the fourth sub pixel 714 of the first line 710 and the eighth sub pixel 724 of the second line 720 may be connected to each other. In addition, the remaining sub pixels of the sub pixels of the continuous lines may be connected to sub pixels located in the same column. For example, the second sub pixel 712 of the first line 710 and the sixth sub pixel 72 of the second line 720 may be connected to each other. For example, the third sub pixel 713 of the first line 710 and the fifth sub pixel 721 of the second line 720 may be connected to each other. The second connection state may indicate a state of being connected between light-emitting elements having the same emitting color.

FIG. 9A illustrates an example of driving sub pixels of the first line 710 in the second mode.

Referring to FIG. 9A, the display 320 may store data in a memory cell of each of the first sub pixel 711, the second sub pixel 712, the third sub pixel 713, and the fourth sub pixel 714 in the first line 710. For example, the display 320 may store a bit sequence in a memory cell 711-4 using a path 910. For example, the bit sequence may include 8-bit data for emitting a red-colored light-emitting element 711-1. For example, the display 320 may store a bit sequence in a memory cell 712-4 using a path 920. For example, the bit sequence may include 8-bit data for emitting a green-colored light-emitting element 712-1. For example, the display 320 may store a bit sequence in a memory cell 713-4 using a path 930. For example, the bit sequence may include 8-bit data for emitting a blue-colored light-emitting element 713-1. For example, the display 320 may store a bit sequence in a memory cell 714-4 using a path 940. For example, the bit sequence may include 8-bit data to refrain from (or delay, skip, or not perform) emission of a green-colored light-emitting element 714-1. For example, the bit sequence stored in the memory cell 714-4 may be a designated bit sequence. For example, the designated bit sequence may be '00000000'. Alternatively, the display 320 may not store data in the memory cell 714-4.

For example, the display 320 may generate a pulse according to a PWM scheme by using data stored in a memory cell. For example, the display 320 may control driving of circuitry for PWM of the first line 710. For example, circuitry 711-3 of the first sub pixel 711 may generate a pulse according to the PWM scheme based on the bit sequence of the memory cell 711-4. The pulse may indicate a signal generated based on the bit sequence. A length (or a width) of the pulse may be associated with a time during which the light-emitting element 711-1 emits. For example, circuitry 712-3 of the second sub pixel 712 may generate a pulse according to the PWM scheme based on the bit sequence of the memory cell 712-4. For example, circuitry 713-3 of the third sub pixel 713 may generate a pulse according to the PWM scheme based on the bit sequence of the memory cell 713-4. For example, circuitry 714-3 of the fourth sub pixel 714 may generate a pulse according to the PWM scheme based on the bit sequence of the memory cell 714-4. For example, the pulse generated by the circuitry 714-3 may be a signal for not performing emission of a light-emitting element.

For example, the display 320 may emit a portion of light-emitting elements by controlling switches of a line. For example, the display 320 may emit the light-emitting element 711-1 based on the pulse transmitted through a path 915 formed by controlling a switch 711-2 of the first sub pixel 711. For example, the display 320 may emit the light-emitting element 712-1 based on the pulse transmitted through a path 925 formed by controlling a switch 712-2 of the second sub pixel 712. For example, the display 320 may emit the light-emitting element 713-1 based on the pulse transmitted through a path 935 formed by controlling a switch 713-2 of the third sub pixel 713. For example, the display 340 may refrain from the emission of the light-emitting element 714-1 based on the pulse transmitted through a path 945 formed by controlling a switch 714-2 of the fourth sub pixel 714. In FIG. 9A, an example in which the path 945 is formed by controlling the switch 714-2 based on a control signal by the display 320 is illustrated, but an embodiment of the present disclosure is not limited thereto. For example, the display 320 may control a path not to be formed using a switch associated with a light-emitting element that will not be emitted in the first line 710. For example, the display 320 may control the path 945 not to be formed by disconnecting a connection between the circuitry 714-3 and the light-emitting element 714-1 through the switch 714-2.

FIG. 9B illustrates an example of driving sub pixels of the second line 720 in the second mode. The example of FIG. 9B may indicate an example of sub pixels driven by a display after starting to drive the first line 710 in the example of FIG. 9A.

Referring to FIG. 9B, the display 320 may store data in a memory cell of each of the fifth sub pixel 721, the sixth sub pixel 722, the seventh sub pixel 723, and the eighth sub pixel 724 in the second line 720. For example, the display 320 may store a bit sequence in a memory cell 721-4 using a path 950. For example, the bit sequence may include 8-bit data for emitting the blue-colored light-emitting element 713-1 in the first line 710. For example, the display 320 may identify the bit sequence based on mapping information. For example, the display 320 may store data in the memory cell 721-4 by identifying data associated with data stored in the memory cell 713-4 for emission of the light-emitting element 713-1 in the first line 710 based on the mapping information. For example, the display 320 may store a bit sequence in a memory cell 722-4 using a path 960. For example, the bit sequence may include 8-bit data for emitting the green-colored light-emitting element 712-1 in the first line 710. For example, the display 320 may store a bit sequence in a memory cell 723-4 using a path 970. For example, the bit sequence may include 8-bit data for emitting the red-colored light-emitting element 711-1 in the first line 710. For example, the display 320 may store a bit sequence in the memory cell 724-4 using a path 980. For example, the bit sequence may include 8-bit data to refrain from the emission of the green-colored light-emitting element 714-1 in the first line 710. For example, the bit sequence stored in the memory cell 724-4 may be a designated bit sequence. For example, the designated bit sequence may be '00000000'. Alternatively, the display 320 may not store data in the memory cell 724-4.

For example, the display 320 may generate a pulse according to the PWM scheme by using data stored in a memory cell. For example, the display 320 may control driving of circuitry for PWM of the second line 720. For example, circuitry 721-3 of the fifth sub pixel 721 may generate a pulse according to the PWM scheme based on the bit sequence of the memory cell 721-4. The pulse may indicate a signal generated based on the bit sequence. A length (or a width) of the pulse may be associated with a time during which the light-emitting element 713-1 in the first line 710 emits. For example, circuitry 722-3 of the sixth sub pixel 722 may generate a pulse according to the PWM scheme based on the bit sequence of the memory cell 722-4. For example, circuitry 723-3 of the seventh sub pixel 723 may generate a pulse according to the PWM scheme based on the bit sequence of the memory cell 723-4. For example, circuitry 724-3 of the eighth sub pixel 724 may generate a pulse according to the PWM scheme based on the bit sequence of the memory cell 724-4.

For example, the display 320 may emit light-emitting elements by controlling line switches and switches. For example, the display 320 may emit the light-emitting element 713-1 based on the pulse transmitted through a path 955 formed by controlling a line switch 721-5 of the fifth sub pixel 721 and the switch 713-2 of the third sub pixel 713. For example, the display 320 may emit the light-emitting element 712-1 based on the pulse transmitted through a path 965 formed by controlling a line switch 722-5 of the sixth sub pixel 722 and the switch 712-2 of the second sub pixel 712. For example, the display 320 may emit the light-emitting element 711-1 based on the pulse transmitted through a path 975 formed by controlling a line switch 723-5 of the seventh sub pixel 723 and the switch 711-2 of the first sub pixel 711. For example, the display 340 may refrain from the emission of the light-emitting element 714-1 based on the pulse transmitted through a path 985 formed by controlling a line switch 724-5 of the eighth sub pixel 724 and the switch 714-2 of the fourth sub pixel 714. In FIG. 9B, an example in which the path 985 is formed by controlling the line switch 724-5 and the switch 714-2 based on a control signal by the display 320 is illustrated, but an embodiment of the present disclosure is not limited thereto. For example, the display 320 may control a path not to be formed by using a switch associated with a light-emitting element that will not be emitted in the first line 710 or a line switch of the second line 720. For example, the display 320 may control the path 985 not to be formed by disconnecting a connection between the circuitry 724-3 of the eighth sub pixel 724 and the light-emitting element 714-1 of the fourth sub pixel 714 through the switch 714-2. Alternatively, the display 320 may control the path 985 not to be formed by disconnecting a connection between the eighth sub pixel 724 and the fourth sub pixel 714 through the line switch 724-5.

Referring to FIGS. 8B and 9B, FIG. 8B illustrates the first connection state in which sub pixels located in the same column are connected to each other regardless of a color in which a light-emitting element emits in continuous lines. In contrast, FIG. 9B illustrates the second connection state in which sub pixels in which a color emitted by the light-emitting element and a color emitted by the light-emitting element in the continuous lines are the same are connected to each other. In a case of the second connection state, a path may be formed in a twisted shape for a connection between a portion of sub pixels (e.g., the first sub pixel 711 and the seventh sub pixel 723 of FIG. 9B).

Referring to FIGS. 9A and 9B, the display 320 may emit, through memory stored in memory cells in the sub pixels of the first line 710, in the second mode, a portion of light-emitting elements 711-1, 712-1, and 713-1 among the light-emitting elements 711-1, 712-1, 713-1, and 714-1 in the first line 710. Each of the portion of light-emitting elements 711-1, 712-1, and 713-1 may emit during a first time period. For example, the first time period may be identified based on data stored in a memory cell for each of the portion of light-emitting devices 711-1, 712-1, and 713-1.

In addition, the display 320 may refrain from emission of the light-emitting elements in the second line 720 in the second mode. The display 320 may omit the emission of the light-emitting elements in the second line 720, and may emit the portion of light-emitting elements 711-1, 712-1, and 713-1 in the first line 710 again by using the second line 720. For example, each of the portion of light-emitting elements 711-1, 712-1, and 713-1 may additionally emit during a second time period shorter than the first time period. The second time period may be identified based on data stored in a memory cell for each of a portion of light-emitting elements 721-1, 722-1, and 723-1 in the second line 720. For example, the second time period may be extended from the first time period.

Referring to the above description, the display 320 may emit the portion of light-emitting elements 711-1, 712-1, and 713-1 in the first line 710 during the first time period (e.g., the first time period 465 of the example 470 of FIG. 4C) and the second time period (e.g., the second time period 475 of the example 470 of FIG. 4C). In other words, compared to the first mode, in the second mode, the display 320 may emit the light-emitting elements in the first line 710 for a longer time.

In FIGS. 7A to 9B, examples of the display 320 in which one emitting line and one non-emitting line are alternately implemented are described, but an embodiment of the present disclosure is not limited thereto. For example, in the display 320, two emitting lines and two non-emitting lines may also be alternately implemented based on the mapping information. Accordingly, a connection state between the sub pixels may be changed.

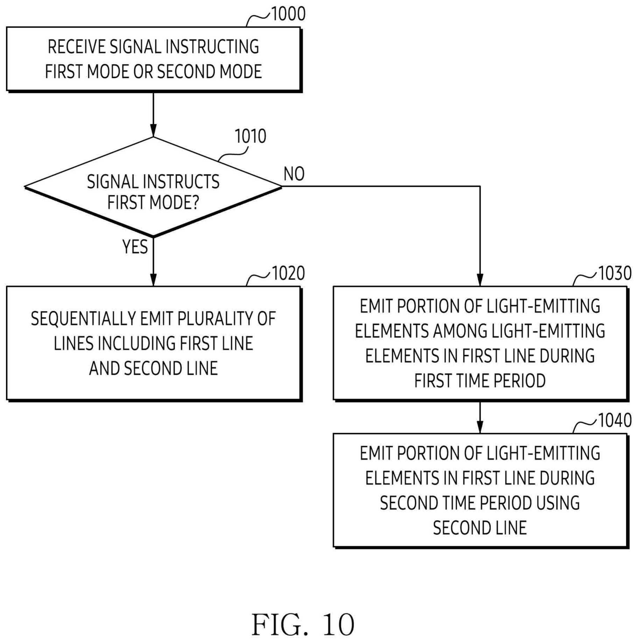

FIG. 10 illustrates an example of an operation flow of a method of controlling a light-emitting element of a display.

At least one operation of the method of FIG. 10 may be performed by the electronic device 101 of FIG. 3A. For example, the electronic device 101 may include a wearable device. For example, the wearable device may include an AR device (e.g., AR glasses). For example, the method of FIG. 10 may be controlled by a display 320. For example, the display 320 may include at least a portion of the display module 160 of FIGS. 1 and 2. For example, the display 320 may include at least a portion of the DDI 230 and the display panel 210 of FIG. 2.

Referring to FIG. 10, in operation 1000, the display 320 may receive a signal instructing a first mode or a second mode. For example, the display 320 may receive the signal from a processor 310. For example, the signal may be generated by the processor 310 identifying a mode in which an image is to be displayed among the first mode and the second mode.

For example, the display 320 may obtain the image. For example, the display 320 may obtain the image to be displayed in the first mode or the second mode from the processor 310. For example, the image may have a resolution based on the mode identified by the processor 310. For example, in a case that the processor 310 identifies the mode as the first mode, the image may have a first resolution (e.g., 2560×2560). For example, in a case that the processor 310 identifies the mode as the second mode, the image may have a second resolution (e.g., 1280×1280) lower than the first resolution. However, an embodiment of the present disclosure is not limited thereto. For example, although in the case that the processor 310 identifies the mode as the second mode, the image may have the first resolution. Thereafter, the display 320 may perform a process of lowering the first resolution of the image to the second resolution.

In operation 1010, the display 320 may identify whether the signal instructs the first mode. For example, the display 320 may identify whether the mode to display the image is the first mode based on the signal received from the processor 310. In the operation 1010, in a case that the display 320 identifies that the mode is the first mode based on the signal, operation 1020 may be performed. In contrast, in a case that the display 320 identifies that the mode is the second mode based on the signal, operation 1030 may be performed.

In the operation 1020, the display 320 may sequentially emit a plurality of lines including a first line and a second line. Each of the plurality of lines may be referred to as a scan line. For example, in the first mode, the display 320 may sequentially emit the plurality of lines including the first line and the second line continuous with the first line. For example, the display 320 may emit a plurality of light-emitting elements in each of the plurality of lines during a first time period.

For example, the display 320 may emit light-emitting elements in the first line during the first time period. The light-emitting elements in the first line may indicate all light-emitting elements connected to the first line. For example, the display 320 may store data in a memory cell for each of the light-emitting elements in the first line. For example, the data may include RGBG data identified based on the image. For example, the data may be configured with an 8-bit bit sequence according to a storage capacity of the memory cell. For example, the display 320 may generate a pulse according to a PWM scheme by using data stored in the memory cell. For example, the display 320 may identify the first time period in which a light-emitting element will be emitted based on a width of the generated pulse. For example, in the display 320, the light-emitting elements in the first line may emit during the first time period from a first timing. The first timing may be triggered by a horizontal synchronization signal for the first line.

For example, the display 320 may emit light-emitting elements in the second line continuous with the first line during the first time period. The light-emitting elements in the second line may indicate all light-emitting elements connected to the second line. For example, the display 320 may store data in a memory cell for each of the light-emitting elements in the second line. For example, the data may include RGBG data identified based on the image. For example, the data may be configured with an 8-bit bit sequence according to a storage capacity of the memory cell. For example, the display 320 may generate a pulse according to the PWM scheme using data stored in the memory cell. For example, the display 320 may identify the first time period in which a light-emitting element will be emitted based on a width of the generated pulse. For example, in the display 320, the light-emitting elements in the second line may emit during the first time period from a second timing. The second timing may be triggered by a horizontal synchronization signal for the second line. For example, a time interval between the second timing and the first timing may correspond to a period of the horizontal synchronization signal.

In the operation 1030, the display 320 may emit a portion of light-emitting elements among the light-emitting elements in the first line during the first time period. For example, in the second mode, the display 320 may emit the portion of light-emitting elements in the first line during the first time period. The display 320 may refrain from emission of the remaining light-emitting elements different from the portion of light-emitting elements among the light-emitting elements in the first line. For example, the display 320 may omit the emission of the remaining light-emitting elements.

For example, the display 320 may identify the portion of light-emitting elements for displaying the image based on mapping information. For example, the display 320 may identify memory cells of the portion of light-emitting elements based on the mapping information. The mapping information may define a mapping relationship between data converted from an image having the second resolution and a plurality of light-emitting elements of the display 320. For example, the mapping information may include a look-up table (LUT). For example, the display 320 may store data in a memory cell for each of the portion of light-emitting elements in the first line. For example, the data may include RGB data identified based on the image. The RGB data may include R data, G data, B data, and blank data. For example, the data may be configured with an 8-bit bit sequence according to a storage capacity of the memory cell.

For example, the display 320 may generate a pulse according to the PWM scheme by using data stored in the memory cell. For example, the display 320 may identify the first time period in which a light-emitting element will be emitted based on a width of the generated pulse. For example, in the display 320, the portion of light-emitting elements in the first line may emit during the first time period from the first timing. The first timing may be triggered by the horizontal synchronization signal for the first line. For example, the display 320 may identify the first time period based on a first bit sequence stored in a first memory cell for a first light-emitting element, and may emit the first light-emitting element during the first time period. For example, the first light-emitting element may be included in the portion of light-emitting elements in the first line.

In operation 1040, the display 320 may emit the portion of light-emitting elements in the first line during a second time period using the second line. For example, in the second mode, the display 320 may additionally emit the portion of light-emitting elements in the first line during the second time period using the second line. The second time period may be extended from the first time period and may be shorter than the first time period. For example, a timing at which the second time period starts may be triggered from a timing at which the emission of the first time period in which the portion of light-emitting elements in the first line emits in the operation 1030 ends.

For example, based on the mapping information, the display 320 may identify data to be stored in a memory cell for the light-emitting element in the second line that refrains from (or omits) emission. For example, the display 320 may identify the first line connected to the light-emitting element for emission, and identify the second line that refrains from (or delays, skips, or does not perform) emission. The second line may indicate a line continuous with the first line and connected to the first line. For example, the display 320 may identify a second light-emitting element in the second line connected to the first light-emitting element in the first line based on the mapping information. For example, the display 320 may store data to be used for the first light-emitting element in the first line, which additionally emits (e.g., the second time period) while refraining from the emission of the second line, in a memory cell for the second light-emitting element. Data stored in a second memory cell for the second light-emitting element may be identified based on the mapping information. For example, the display 320 may identify data to be stored in the second memory cell for the second light-emitting element based on data stored in the first memory cell for the first light-emitting element while the first line emits (e.g., the first time period). The data stored in the second memory cell may be referred to as a second bit sequence. For example, the display 320 may generate a pulse according to the PWM scheme based on data stored in the second memory cell for the second light-emitting element. For example, a width of a pulse generated based on the second bit sequence may correspond to the second time period.

For example, the display 320 may control a line switch for connecting a sub pixel of the first line and a sub pixel of the second line. For example, by controlling the line switch, the display 320 may change a connection state between the first light-emitting element and the second light-emitting element from a disconnected state to a connected state. Accordingly, the display 320 may emit the first light-emitting element again during the second time period identified based on the second bit sequence stored in the second memory cell.

In FIG. 10, an example of a method by which the display 320 including the first line and the second line is driven has been described, but an embodiment of the present disclosure is not limited thereto. For example, in the display 320, the above-described method may be applied to other lines (e.g., third line and fourth line) included in the plurality of lines in substantially the same way. The third line may indicate a line continuous with the second line. The fourth line may indicate a line continuous with the third line and connected to the third line.

For example, as in the operation 1030, the display 320 may emit a portion of light-emitting elements among the light-emitting elements in the third line continuous with the second line during the first time period. For example, as in the operation 1040, the display 320 may additionally emit the portion of light-emitting elements in the third line during a third time period using the fourth line. The third time period may be extended from the first time period in which the portion of light-emitting elements in the third line emits. For example, the third time period may be identified based on the mapping information. For example, it may be the same as the second time period. Alternatively, the third time period may be different from the second time period.

Referring to FIGS. 1 to 10, an electronic device and a method according to an embodiment of the present disclosure may use a mode (e.g., the second mode) for a low-power that drives a portion of sub pixels among all sub pixels of the display 320 having an RGBG sub pixel rendering structure. Unlike a method of alternately scanning odd lines and even lines of a plurality of lines, the electronic device and the method according to an embodiment of the present disclosure may scan a portion of lines of the plurality of lines in the mode for the low-power. For example, in the mode for the low-power that drives the portion of sub pixels, the display 320 may perfrom scaning for a portion of lines among a plurality of lines for all of the sub pixels. In the mode for the low-power, a scan may not be executed for the remaining lines different from the portion of lines among the plurality of lines. The electronic device and the method according to an embodiment of the present disclosure may reduce power consumption of the processor 310 (e.g., an application processor) by outputting an image having a resolution lower than that of a mode (e.g., the first mode) different from the mode for the low-power. In addition, the electronic device and the method according to an embodiment of the present disclosure may reduce power consumption by reducing the number of sub pixels that emit when using the mode for the low-power. In addition, the electronic device and the method according to an embodiment of the present disclosure may compensate for a decrease in brightness that occurs when the portion of sub pixels are driven using additional emission.

A wearable device 101 as described above may include a display 320 including a driving layer 320-1 including a silicon substrate and an emission layer 320-2 on the driving layer 320-1. The emission layer 320-2 may include a plurality of light-emitting elements. The wearable device 101 may include a processor 310. The display 320 may be configured to receive a signal instructing a first mode or a second mode for a low-power different from the first mode from the processor 310. The display 320 may be configured to sequentially emit, in the first mode identified based on the signal, a plurality of lines including a first line of the display 320 and a second line continuous with the first line. Light-emitting elements included in each of the plurality of lines may emit during a first time period. The display 320 may be configured to emit, in the second mode identified based on the signal, a portion of light-emitting elements among light-emitting elements in the first line during the first time period, and the portion of light-emitting elements in the first line during a second time period extended from the first time period during which the portion of light-emitting elements in the first line emits using the second line connected to the first line.

According to an embodiment, the display 320 may be configured to emit, in the second mode, a first light-emitting element among the portion of light-emitting elements in the first line during the first time period identified based on a first memory cell for the first light-emitting element. The display 320 may be configured to emit, in the second mode, the first light-emitting element during the second time period identified based on a second memory cell for a second light-emitting element connected to the first light-emitting element among light-emitting elements in the second line.

According to an embodiment, the display 320 may be configured to, in response to identifying the second mode based on the signal, store a first bit sequence instructing the first time period in the first memory cell and a second bit sequence instructing the second time period in the second memory cell. The first time period may be identified based on a pulse width modulation (PWM) scheme using the first bit sequence. The second time period may be identified based on the PWM scheme using the second bit sequence.

According to an embodiment, the display 320 may be configured to change, in the second mode, switches in the second line from a first state disconnecting a connection between the first line and the second line to a second state connecting the second line to the first line. A switch connecting the second light-emitting element to the first light-emitting element among the switches may form a path between the second memory cell and the first light-emitting element. The switch may be changed from the first state to the second state before the second time period.

According to an embodiment, the switch may be changed from the second state to the first state after the second time period.

According to an embodiment, a color indicated by the second light-emitting element, in a case that a color indicated by the first light-emitting element is a red color, and the path connects the second light-emitting element to the first light-emitting element located in different columns each other, may be a red color. The column may indicate a direction in which the plurality of lines is disposed.

According to an embodiment, a color indicated by the second light-emitting element, in a case that a color indicated by the first light-emitting element is a red color, and the path connects the second light-emitting element to the first light-emitting element located in the same column, may be a blue color. The column may indicate a direction in which the plurality of lines is disposed.

According to an embodiment, the display 320 may be configured to emit, in the first mode, the first light-emitting element during the first time period identified based on a first memory cell for a first light-emitting element included in light-emitting elements in the first line. The display 320 may be configured to emit, in the first mode, the second light-emitting element during the first time period identified based on a second memory cell for a second light-emitting element included in light-emitting elements in the second line.

According to an embodiment, the display 320 may be configured to, while the portion of light-emitting elements in the first line emits during the second time period using the second line, refrain from emission of light-emitting elements in the second line. The display 320 may be configured to emit, in the second mode, a portion of light-emitting elements among light-emitting elements in a third line continuous with the second line among the plurality of lines during the first time period.

According to an embodiment, the display 320 may be configured to emit, in the second mode, the portion of light-emitting elements in the third line during a third time period extended from the first time period during which the portion of light-emitting elements in the third line emits using a fourth line continuous with the third line among the plurality of lines. The fourth line may be connected to the third line. A timing at which the portion of light-emitting elements in the third line starts to emit may be different from a timing at which the portion of light-emitting elements in the first line starts to emit.

According to an embodiment, each of the plurality of light-emitting elements of the emission layer 320-2 may be connected to circuitry for pulse width modulation (PWM) and a memory cell for each of the plurality of light-emitting elements.

According to an embodiment, the display 320 may be configured to, when the signal instructs the first mode, obtain, from the processor 310, an image having a first resolution. The display 320 may be configured to, when the signal instructs the second mode, obtain, from the processor 310, another image having a second resolution lower than the first resolution.

According to an embodiment, the display 320 may be configured to convert, in the first mode, a bit sequence of a first length included in the image to a bit sequence of a second length shorter than the first length. The display 320 may be configured to, based on a bit sequence of the second length, sequentially emit the plurality of lines. A bit sequence of the first length may include RGB data. A bit sequence of the second length may include RG data or BG data.

According to an embodiment, the display 320 may be configured to convert, in the second mode, a bit sequence of a first length included in the other image to a bit sequence of a second length shorter than the first length. The display 320 may be configured to, based on a bit sequence of the second length, emit the portion of light-emitting elements in the first line during the first time period and the second time period. A bit sequence of the first length may include RGB data. A bit sequence of the second length may include the RGB data and a portion of blank data. The blank data may indicate a designated bit sequence or a state that data is off.

A wearable device 101 as described above may include a display 320 including a driving layer 320-1 including a silicon substrate and an emission layer 320-2 on the driving layer 320-1. The emission layer 320-2 may include a plurality of light-emitting elements. The wearable device 101 may include a processor 310. The display 320 may be configured to receive a signal instructing execution of a mode for a low-power from the processor 310. The display 320 may be configured to emit, in the mode, a portion of light-emitting elements among first light-emitting elements in a first line among a plurality of lines of the display 320 during a first time period. The display 320 may be configured to refrain from emission of second light-emitting elements in a second line continuous with the first line and connected to the first line in the mode, and to emit the portion of light-emitting elements among the first light-emitting elements during a second time period extended from the first time period using the second line.

According to an embodiment, the display 320 may be configured to emit, during the first time period, a portion of light-emitting elements among third light-emitting elements in a third line continuous with the second line in the mode. A timing at which the first time period in which the portion of light-emitting elements among the third light-emitting elements emits starts may be different from a timing of the first time period during which the portion of light-emitting elements among the first light-emitting elements emits.

According to an embodiment, each of the plurality of light-emitting elements of the emission layer 320-2 may be connected to circuitry for pulse width modulation (PWM) and a memory cell for each of the plurality of light-emitting elements.

According to an embodiment, the display 320 may be configured to emit the first light-emitting element during the first time period identified according to a pulse width modulation (PWM) scheme based on a first bit sequence stored in a first memory cell for the first light-emitting element in the mode. The display 320 may be configured to emit a second light-emitting element during the second time period identified according to the PWM scheme based on a second bit sequence stored in a second memory cell for the second light-emitting element connected to the first light-emitting element among light-emitting elements in the second line in the mode.

According to an embodiment, the display 320 may be configured to change switches of the second line from a first state of disconnecting a connection between the first line and the second line to a second state of connecting the first line and the second line at a timing at which the second time period starts in the mode. The display 320 may be configured to change the switches of the second line from the second state to the first state at a timing at which the second time period expires in the mode.

According to an embodiment, the wearable device 101 may include an augmented reality (AR) device.

A method performed for a display 320 of a wearable device 101 including a processor 310, as described above, the method may include receiving a signal instructing a first mode or a second mode for a low-power different from the first mode from the processor 310. The method may include sequentially emitting, in the first mode identified based on the signal, a plurality of lines including a first line of the display 320 and a second line continuous with the first line. Light-emitting elements included in each of the plurality of lines may emit during a first time period. The method may include emitting, in the second mode identified based on the signal, a portion of light-emitting elements among light-emitting elements in the first line during the first time period, and the portion of light-emitting elements in the first line during a second time period extended from the first time period during which the portion of light-emitting elements in the first line emits using the second line connected to the first line.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (101) comprising:
a display (320) including a driving layer (320-1) including a silicon substrate and an emission layer (320-2) on the driving layer (320-1), the emission layer (320-2) including a plurality of light-emitting elements; and
a processor (310),
wherein the display (320) is configured to:
receive a signal instructing a first mode or a second mode for a low-power different from the first mode from the processor (310),
sequentially emit, in the first mode identified based on the signal, a plurality of lines including a first line of the display (320) and a second line continuous with the first line, wherein light-emitting elements included in each of the plurality of lines emit during a first time period, and
emit, in the second mode identified based on the signal, a portion of light-emitting elements among light-emitting elements in the first line during the first time period, and the portion of light-emitting elements in the first line during a second time period extended from the first time period during which the portion of light-emitting elements in the first line emits using the second line connected to the first line.

2. The wearable device (101) of claim 1, wherein the display (320) is configured to:
emit, in the second mode, a first light-emitting element among the portion of light-emitting elements in the first line during the first time period identified based on a first memory cell for the first light-emitting element, and
emit, in the second mode, the first light-emitting element during the second time period identified based on a second memory cell for a second light-emitting element connected to the first light-emitting element among light-emitting elements in the second line.

3. The wearable device (101) of claim 2, wherein the display (320) is configured to:
in response to identifying the second mode based on the signal, store a first bit sequence instructing the first time period in the first memory cell and a second bit sequence instructing the second time period in the second memory cell,
wherein the first time period is identified based on a pulse width modulation (PWM) scheme using the first bit sequence, and
wherein the second time period is identified based on the PWM scheme using the second bit sequence.

4. The wearable device (101) of claim 2, wherein the display (320) is configured to:
change, in the second mode, switches in the second line from a first state disconnecting a connection between the first line and the second line to a second state connecting the second line to the first line,
wherein a switch connecting the second light-emitting element to the first light-emitting element among the switches forms a path between the second memory cell and the first light-emitting element, and
wherein the switch is changed from the first state to the second state before the second time period.

5. The wearable device (101) of claim 4, wherein the switch is changed from the second state to the first state after the second time period.

6. The wearable device (101) of claim 4, wherein a color indicated by the second light-emitting element, in a case that a color indicated by the first light-emitting element is a red color, and the path connects the second light-emitting element to the first light-emitting element located in different columns each other, is a red color, and
wherein the column indicates a direction in which the plurality of lines is disposed.

7. The wearable device (101) of claim 4, wherein a color indicated by the second light-emitting element, in a case that a color indicated by the first light-emitting element is a red color, and the path connects the second light-emitting element to the first light-emitting element located in the same column, is a blue color, and
wherein the column indicates a direction in which the plurality of lines is disposed.

8. The wearable device (101) of claim 1, wherein the display (320) is configured to:
emit, in the first mode, the first light-emitting element during the first time period identified based on a first memory cell for a first light-emitting element included in light-emitting elements in the first line, and
emit, in the first mode, the second light-emitting element during the first time period identified based on a second memory cell for a second light-emitting element included in light-emitting elements in the second line.

9. The wearable device (101) of claim 1, wherein the display (320) is configured to:
while the portion of light-emitting elements in the first line emits during the second time period using the second line, refrain from emission of light-emitting elements in the second line, and
emit, in the second mode, a portion of light-emitting elements among light-emitting elements in a third line continuous with the second line among the plurality of lines during the first time period.

10. The wearable device (101) of claim 9, wherein the display (320) is configured to:
emit, in the second mode, the portion of light-emitting elements in the third line during a third time period extended from the first time period during which the portion of light-emitting elements in the third line emits using a fourth line continuous with the third line among the plurality of lines,
wherein the fourth line is connected to the third line, and
wherein a timing at which the portion of light-emitting elements in the third line starts to emit is different from a timing at which the portion of light-emitting elements in the first line starts to emit.

11. The wearable device (101) of claim 1, wherein each of the plurality of light-emitting elements of the emission layer (320-2) is connected to circuitry for pulse width modulation (PWM) and a memory cell for each of the plurality of light-emitting elements.

12. The wearable device (101) of claim 1, wherein the display (320) is configured to:
when the signal instructs the first mode, obtain, from the processor (310), an image having a first resolution, and
when the signal instructs the second mode, obtain, from the processor (310), another image having a second resolution lower than the first resolution.

13. The wearable device (101) of claim 12, wherein the display (320) is configured to:
convert, in the first mode, a bit sequence of a first length included in the image to a bit sequence of a second length shorter than the first length, and
based on a bit sequence of the second length, sequentially emit the plurality of lines,
wherein a bit sequence of the first length includes RGB data, and
wherein a bit sequence of the second length includes RG data or BG data.

14. The wearable device (101) of claim 12, wherein the display (320) is configured to:
convert, in the second mode, a bit sequence of a first length included in the other image to a bit sequence of a second length shorter than the first length, and
based on a bit sequence of the second length, emit the portion of light-emitting elements in the first line during the first time period and the second time period,
wherein a bit sequence of the first length includes RGB data,
wherein a bit sequence of the second length includes the RGB data and a portion of blank data, and
wherein the blank data indicates a designated bit sequence or a state that data is off.

15. A method performed for a display (320) of a wearable device (101) including a processor (310), the method comprising:
receiving a signal instructing a first mode or a second mode for a low-power different from the first mode from the processor (310),
sequentially emitting, in the first mode identified based on the signal, a plurality of lines including a first line of the display (320) and a second line continuous with the first line, wherein light-emitting elements included in each of the plurality of lines emit during a first time period, and
emitting, in the second mode identified based on the signal, a portion of light-emitting elements among light-emitting elements in the first line during the first time period, and the portion of light-emitting elements in the first line during a second time period extended from the first time period during which the portion of light-emitting elements in the first line emits using the second line connected to the first line.
